(19) Europäisches Patentamt
European Patent Office
Office européen des brevets

(11) **EP 3 343 193 B1**

(12) **EUROPÄISCHE PATENTSCHRIFT**

(45) Veröffentlichungstag und Bekanntmachung des Hinweises auf die Patenterteilung:
**06.07.2022 Patentblatt 2022/27**

(21) Anmeldenummer: **17206778.7**

(22) Anmeldetag: **12.12.2017**

(51) Internationale Patentklassifikation (IPC):
***G01L 5/28*** *(2006.01)* ***B60T 17/22*** *(2006.01)*

(52) Gemeinsame Patentklassifikation (CPC):
**G01L 5/282; B60T 17/22**

(54) **MOBILE KALIBRIERUNGSVORRICHTUNG FÜR EINEN BREMSENPRÜFSTAND**

MOBILE CALIBRATING APPARATUS FOR A TEST STAND FOR BRAKES

DISPOSITIF D'ÉTALONNAGE MOBILE POUR UN BANC D'ESSAI DE FREINAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.12.2016 DE 102016124105**
**19.04.2017 DE 102017108279**

(43) Veröffentlichungstag der Anmeldung:
**04.07.2018 Patentblatt 2018/27**

(73) Patentinhaber: **Dekra Automobil GmbH**
**70565 Stuttgart (DE)**

(72) Erfinder:
• **GEHRKE, Matthias**
**90427 Nürnberg (DE)**
• **GRAßL, Björn**
**90584 Allersberg (DE)**

(74) Vertreter: **Spachmann, Holger**
**Stumpf Patentanwälte PartGmbB**
**Alte Weinsteige 73**
**70597 Stuttgart (DE)**

(56) Entgegenhaltungen:
**EP-A1- 1 202 037 DE-C1- 4 135 766**

**Beschreibung**

Die vorliegende Erfindung betrifft eine mobile Kalibrierungsvorrichtung zum Kalibrieren von Bremsenprüfständen für radbetriebene Kraftfahrzeuge wie Motorräder, PKWs, LKWs oder weitere radangetriebene und bremsbare Fahrzeuge.

Bremsprüfstände sind Einrichtungen, mit denen die Wirkungen der Fahrzeugbremse eines Kraftfahrzeuges im Rahmen von Bremsprüfungen bei der regelmäßigen technischen Überwachung der Fahrzeuge ermittelt werden und die zu diesem Zweck für jedes Rad einzeln die gemessene Bremskraft direkt anzeigen und/oder aufzeichnen. Üblicherweise und im Sinne der Erfindung umfasst ein Bremsenprüfstand zwei um einen Abstand Ar parallel gelagerte Bremsenprüfrollen, zwischen denen ein Rad eines Kraftfahrzeugs aufgenommen und dessen Bremskraft aufgezeichnet werden kann. Die Kalibrierungsvorrichtung dient dazu, die von dem Bremsenprüfstand erfasste Bremskraft unter definierten Bedingungen unabhängig vom Auswertesystem zu erfassen, um eine Genauigkeitsprüfung, Kalibrierung oder Eichung des Bremsenprüfstands vornehmen zu können.

Üblicherweise umfasst eine Bremsenprüfstandsanlage zumindest zwei parallel angeordnete Bremsenprüfstände, um die Bremswirkung jedes Rades einer Fahrzeugachse parallel und individuell erfassen zu können. Gleichwohl kann auch ein Bremsenprüfstand kalibriert werden, der für eine gemeinansame Feststellung der Gesamtbremswirkung beider Räder einer Fahrzeugachse ausgelegt ist, wobei konstruktiv bedingt beide Räder auf zwei gekoppelte Paare vom Bremsenprüfrollen wirken.

STAND DER TECHNIK

Aus dem Stand der Technik sind diverse Kalibrierungsvorrichtungen zum Kalibrieren eines Prüfstandes für Fahrzeugbremsen bekannt. So sind beispielsweise aus der DE 100 53 513 A1 und der DE 41 35 766 C1 Kalibrierungsvorrichtungen bekannt, die zur Kalibrierung von Bremsenprüfständen dienen.

Daneben sind gattungsgemäße Kalibrierungsvorrichtungen aus der DE 38 05 724 C1, DE 103 05 346 A1, der DE 103 26 116 A1, der DE 10 2011 088 424 A1 und der US 2012/0297858 A1 und der DE 20 2016 005 174 U1 bekannt.

Die DE 41 35 766 C1 beschreibt eine mobile Kalibrierungseinrichtung für einen Fahrzeugbremsstand. Hierzu umfasst die in ein Serienfahrzeug integrierte Kalibrierungseinrichtung zusätzlich zu einem serienmäßigen Bremssattel 4 einen Messbremssattel, der auf die Bremsscheibe eines Fahrzeugrades wirkt. Der Messbremssattel ist einerseits an einer mit dem Radträger des Serienfahrzeugs fest verbundenen Grundplatte um eine Achse schwenkbar gelagert und anderseits über eine als Zugstab ausgebildete Momentenstütze am Radträger des Serienfahrzeugs abgestützt. Die Momentenstütze weist eine Kraftmessanordnung mit Dehnungsmessstreifen zur Erfassung einer kraftabhängigen Dehnung der Momentenstütze auf.

Eine gattungsgleiche Kalibrierungseinrichtung ist in der EP 1 202 037 A1 beschrieben. Bei dieser Einrichtung werden auf einen Messbremssattel einwirkende Kräfte über zwei armartige Halteelemente und zwei Messträger die mit einer drehfesten Achse eines Messrades fest verbunden sind, abgeleitet, wobei die Messträger den Messbremssattel auf der drehfesten Achse tragen. Zur Erfassung kraftabhängiger Formänderungen der Messträger sind Messstreifenanordnungen vorgesehen.

Nachteilig aus dem aus dem Stand bekannten Kalibrierungsvorrichtungen ist, dass diese im Transport und Montage aufwändig sind, und keine Messung von sehr hohen Bremskräften bis hin zu den Messgrenzen des Bremsenprüfstandes erlauben. Des Weiteren sind die vorbekannten Kalibrierungsvorrichtungen mit einer hohen Anzahl Fehlerquellen behaftet und relativ aufwändig und komplex zu bedienen.

Die Deutsche Akkreditierungsstelle GmbH (DAkkS) ist die nationale Akkreditierungsstelle der Bundesrepublik Deutschland mit Sitz in Berlin. Diese hat in der Vergangenheit bemängelt, dass Kalibrierungs- bzw. Eichungsmaßnahmen gerade im Bereich von KFZ-Prüfungen unzureichend sind und die bereits eingesetzten Kalibrierungsvorrichtungen und -verfahren in gewissen Fällen keine zuverlässigen Werte liefern. Somit besteht ein dringender Bedarf, die Genauigkeit, leichte Bedienbarkeit und Robustheit gegen Fehlkalibrierung zu erhöhen. Die DAkkS hat eine Richtlinie für die Anwendung, Beschaffenheit und Prüfung von Bremsprüfständen (Bremsprüfstandsrichtlinie) herausgegeben, die ab dem 01.10.2011 für neu in den Verkehr kommende und für alle im Verkehr befindlichen Bremsprüfstände ab dem 01.01.2020 anzuwenden ist. Es ist vorgesehen, dass die maximal ermittelte Bremskraft unter einem Abschaltwert des Bremsprüfstands gemessen wird und die ermittelte Bremskraft mit einer messtechnisch nachvollziehbaren Prüfmesskraft zur Kalibrierung verglichen wird. Eine Prüfung des Bremsenprüfstands muss vor der ersten Inbetriebnahme des Prüfstandes am Aufstellungsort, vor Inbetriebnahme an geänderten Aufstellungsorten und dann in Abständen von maximal 2 Jahren durchgeführt werden. Die Fehlergrenzen für die Anzeige und die Aufzeichnung von Bremskräften beträgt bei Prüfständen bis zu einer nominalen maximalen Bremskraft von 8kN im Messbereich von 0 - 2000 N +/- 40 N und darüber +/- 2 % vom momentanen Messwert sowie bei Prüfständen über einer nominalen maximalen Bremskraft von 8kN im Messbereich von 0 - 5000 N +/- 100 N und darüber +/- 2 % vom momentanen Messwert.

Zur Durchführung der Bremsprüfstandsrichtlinie und Überprüfung und Einstellung von Bremsenprüfständen wird eine Kalibrierungsvorrichtung eingesetzt, die zum einen die Funktion des Bremsprüfstands messtechnisch analysieren und protokollieren kann,und zum anderen zur Kalibrierung, d.h. Justierung des Bremsenprüfstands eingesetzt werden kann.

Aus dem Stand der Technik ergibt sich das Problem, dass die bisher eingesetzten Kalibrierungsvorrichtungen insbesondere an Messbereichsgrenzen ungenau sind, Fehlbedienungen auftreten können und Anwendung, Transport und Einsatz mit hohem Aufwand verbunden ist.

Somit ist es Aufgabe der Erfindung, eine Kalibrierungsvorrichtung vorzuschlagen, welche die oben dargestellten Probleme des Standes der Technik lösen kann.

Die vorgenannte Aufgabe wird durch eine Kalibrierungsvorrichtung nach dem unabhängigen Anspruch gelöst. Vorteilhafte Ausbildungen sind Gegenstand der Unteransprüche.

OFFENBARUNG DER ERFINDUNG

Gegenstand der Erfindung ist eine Kalibrierungsvorrichtung für einen Bremsenprüfstand, wobei der Bremsenprüfstand zwei um einen Abstand Ar parallel gelagerte Bremsenprüfrollen aufweist.

Es wird vorgeschlagen, dass die Kalibrierungsvorrichtung zumindest ein mit den Bremsprüfrollen zusammenwirkendes Messrad, eine Bremseinrichtung zur steuerbaren Bremsung des Messrades, einen Drehmomentarm, über welchen die Bremseinrichtung zum Ableiten einer während einer Bremsung des Messrades auftretenden Gegenkraft in einem Abstützpunkt abgestützt ist, zumindest einen Kraftmesssensor, welcher dazu ausgelegt ist, die am Abstützpunkt wirksame Gegenkraft zu ermitteln, und eine mit dem Kraftmesssensor gekoppelte Kalibrierungsauswerteeinrichtung zur Verarbeitung und/oder Darstellung von durch den Kraftmesssensor erfassten Messwerten umfasst.

Erfindungsgemäß stützt sich die Bremseinrichtung über den Drehmomentarm gegenüber einer Bodenfläche auf dem Kraftmesssensor ab. Bei dieser erfindungsgemäßen Ausgestaltung führt das bei einer Bremsung des Messrades auftretende Drehmoment zu einer Erhöhung der von dem Kraftmesssensor ermittelten Messwerte, wobei der Kraftmesssensor eine Druckkraft des Drehmomentarms auf die Bodenfläche bestimmt. Dabei wird ein Teil der Bremskraft auf den Boden abgeleitet und somit die Anpresskraft des Messrades auf die Bremsenprüfrolle während des Bremsvorgangs verringert.

Alternativ wird erfindungsgemäß eine Rampe vorgesehen, die ein Ballastgewicht, insbesondere das Gewicht eines Fahrzeugs aufnimmt und sich mit ihrem einen Ende auf einer Drehachse des Messrades abstützt, und der Drehmomentarm wird unter der Rampe angebracht und stützt sich über den Kraftmesssensor gegen die Unterseite der Rampe ab. Somit ist keine bodenseitige Abstützen notwendig und das Drehmoment und somit Gewichtskraft wird nicht auf den Boden, sondern zurück in die Rampe eingeleitet. Durch diese Abstützung des Drehmomentarms geht keine Gewichtskraft beim Bremsen verloren, im Gegenteil wird der Anpressdruck der Kalibriervorrichtung sogar erhöht, und wirkt dabei nach wie vor auf die Drehachse. Der Messaufbau kann kompakt ausgeführt werden, und es ist über die Rampe hinweg kein Raum für eine Abstützung des Drehmomentarms notwendig. Die Anpresskraft des Messrades wird erhöht und die Bauform verringert.

Sobald die Bremseinrichtung aktiviert wird, ändert sich die von dem Drehmomentarm auf den Kraftmesssensor ausgeübte Kraft, wobei die Änderung der Gegenkraft ein Maß für die Größe der Bremskraft ist. Demnach wird die Abstützkraft direkt oder indirekt durch den Kraftmesssensor ermittelt. Der Kraftmesssensor ist eingerichtet, die auf den Drehmomentarm wirkende Gegenkraft bei Abstützung direkt oder indirekt zu messen. Hierzu kann am Abstützpunkt des Drehmomentarms beispielsweise eine Kraftmessdose, ein Dehnungsmessstreifen, Hydrauliksensor, ein piezoelektrischer oder magnetostriktiver Sensor, ein Torsionssensor oder ein vergleichbarer Drehmoment- oder Kraftmesssensor eingesetzt werden. In Abhängigkeit von der Konfiguration der Kalibrierungsvorrichtung kann das bei einer Bremsung des Messrades auf den Drehmomentarm einwirkende Drehmoment sowohl eine Erhöhung der von dem Kraftmesssensor registrierten Kraft führen als auch eine Reduzierung einer beispielsweise durch ein Ballastgewicht aufgebrachten, vom Kraftmesssensor registrierten Kraft bewirken. Die von der Kalibrierungsvorrichtung erfassten und gegebenenfalls verarbeiteten Messwerte entsprechen somit der tatsächlichen, von der Bremseinrichtung erzeugten Bremskräfte und können zur Kalibrierung der von dem Bremsenprüfstand ermittelten Messwerte der Bremskraft herangezogen werden. Durch die Verwendung des Drehmomentarms kann eine Bremskraftbestimmung weitgehend unabhängig von der Anpresskraft des Messrades auf den Bremsenprüfstand erfolgen, somit wird der Kraftmesssensor nur im Bremsbetrieb proportional zur Bremskraft belastet. Gegenüber herkömmlichen Systemen, die beispielsweise einen vorbelasteten Drehmomentsensor einsetzen, gibt es praktisch keinen Offset in der Bremskraftbestimmung, so dass keine aufwändige und größere Konstruktion erforderlich wird, um eine Anpresskraft vom Bremskraftsensor fernzuhalten.

Das Messrad ist insbesondere als Doppelmessrad ausgebildet, wobei die Messräder über eine Achse miteinander verbunden sind, und die Bremseinrichtung auf die Achse wirkt. Der Abstand der beiden Messräder ist vorteilhaft so bemessen, dass diese an den äußeren axialen Bereichen der Bremsprüfrollen aufsetzen, da diese in der Regel nur gering verschleißen sind. Es ist denkbar, das Messrad auch als zylinderförmige Messwalze auszubilden, um eine große Auflagefläche auf den Bremsenprüfrollen zu erreichen.

Es ist denkbar, dass der Drehmomentarm zwischen der Bremseinrichtung und dem Messrad oder den Messrädern an oder in einer Messradachse angeordnet ist. In der Messradachse kann ein Torsions- oder Drehmomentsensor angeordnet sein, der die beim Bremsvorgang auftretenden Drehmomente aufnehmen kann, um hieraus die Bremskraft zu berechnen. Dabei könnte die Bremseinrichtung fest an einer äußeren Befestigungsstruktur befestigt sein. Zur exakten Bremskraftberechnung wäre es in diesem Fall vorteilhaft, dass der mit dem Torsions- oder Drehmomentsensor versehen Achsabschnitt des Messrades oder der Messräder gewichtskraftfrei bleibt, so dass ein auf die Messräder einwirkendes Belastungsgewicht nicht über den Torsions- oder Drehmomentsensor geleitet wird. Es wäre denkbar, die Bremseinrichtung einseitig an einem Achsenendbereich einer Doppelmessradanordnung und nicht zwischen zwei Messrädern anzuordnen, und in diesem Achsenendbereich zwischen Bremseneinrichtung und erstem Messrad das Drehmoment zu messen.

Die Bremseneinrichtung dient dazu, eine Bremsenwirkung auf das Messrad auszuüben. In einer vorteilhaften Weiterentwicklung kann die Bremseinrichtung eine hydraulische Scheibenbremse mit einstellbarer Bremskraft sein, die drehbar an einer Achse des Messrades befestigt ist und auf die Drehachse des Messrades wirkt. Es zeigt sich, dass Scheibenbremsen eine hohe Bremskraft ausüben können, diese sind in den meisten Fahrzeugtypen verbaut. Die Bremskraft ist einfach z.B. über einen variablen Hydraulikdruck der Bremszylinder einstellbar. Hierzu kann eine elektrische Hydraulikpumpe eingesetzt werden. Die eingesetzte Bremskraft kann indirekt über einen Aufnahmestrom der Hydraulikpumpe oder über einen Hydraulikdrucksensor erfasst werden. Somit kann eine Bremsenprüfstandskalibrierung bei verschiedenen Bremskräften durchgeführt werden, wobei der Prüfablauf automatisiert ablaufen kann und jeweils verschiedene Bremskräfte aufgewendet werden können. Alternativ zu einer hydraulischen Bremskraftsteuerung kann auch eine pneumatische oder eine elektromechanische Bremskraftsteuerung der Bremseneinrichtung eingesetzt werden.

Weitergehend hiervon kann vorteilhafterweise eine Lamellenbremse als spezielle Bauform einer Scheibenbremse eingesetzt werden. Lamellenbremsen werden auch als Vollscheibenbremsen bezeichnet, weil die gesamte Fläche der Bremsscheibe zum Verzögern benutzt werden kann. Mehrere vorzugsweise im Ölbad laufende Innen- und Außenlamellen werden axial gegeneinander gepresst, wodurch eine Bremswirkung entsteht. Sie können insbesondere bei niedrigen Drehgeschwindigkeiten mit hohem Bremsmoment eingesetzt werden.

In einer vorteilhaften Weiterentwicklung kann die Kalibrierungsvorrichtung eine Rampe zur Aufnahme eines Ballastgewichts, insbesondere eines Fahrzeugs aufweisen, wobei sich die Rampe mit ihrem einen Ende auf einer Drehachse des Messrades abstützt. Um eine möglichst genaue Kalibrierung zu erreichen, ist ein Schlupf zwischen dem Messrad und den Bremsenprüfrollen möglichst zu unterbinden. Dies kann durch eine ausreichend hohe Gewichtskraft Fa erreicht werden, die auf die Rampe einwirkt. Zweckmäßigerweise kann diese Gewichtskraft durch ein Fahrzeug aufgebracht werden, welches mit einer oder sogar beiden Achsen auf der Rampe steht und das Messrad auf die Bremsenprüfrollen presst. Das andere Ende der Rampe kann sich bodenseitig abstützen. Die bodenseitige Abstützung der Rampe erfolgt bevorzugt bezüglich der Achse des Messrades gegenüberliegend zum Abstützpunkt des Drehmomentarms. Somit wird das durch die Rampe aufgebrachte Gewicht durch die bodenseitige Abstützung der Rampe und das Messrad abgeleitet, so dass der Drehmomentarm hiervon nicht belastet wird. Bei Auffahren auf die Rampe stellt sich in der Regel das Fahrzeug schräg, wodurch das auf der Rampe aufsetzende Rad deutlich mehr als 25% des gesamten Fahrzeuggewichts als Gewichtskraft auf das Messrad zur Erhöhung einer Andruckkraft auf die Bremsenprüfrollen aufbringen kann. Durch die erhöhte Gewichtskraft auf das Messrad können höhere Bremskräfte erreicht werden, bevor ein Schlupf zwischen Messrad und Bremsenprüfrollen auftritt.

Besonders vorteilhaft kann die Rampe von einem Rad des Fahrzeugs bis exakt auf oder über die Drehachse des Messrades befahren werden, wobei ein bodenseitiges Ende der Rampe an einem Unterboden des Fahrzeugs abstützbar ist. Steht das Fahrzeugrad exakt über der Drehachse, so wird zumindest 25% des Fahrzeuggewichts auf die Drehachse übertragen. Da dabei das zweite Rad einer zweirädrigen Fahrzeugachse entlastet wird, können zwischen 25%-50% des Fahrzeuggewichts auf die Drehachse wirken. Das am gegenüberliegenden Achsende angebrachte zweite Vorderrad liegt räumlich tiefer, nämlich direkt auf dem gegenüber liegenden Antriebsrollenpaar des Bremsenprüfstands und wird entlastet. Deshalb wird das Rad auf der Rampe der Kalibriervorrichtung weiter belastet und verstärkt somit die maximal erreichbare Bremskraft bis zum Schlupf. Somit sitzt in dieser Position das benachbarte Achsrad des Fahrzeugs auf dem parallelen Bremsenprüfstand für das zweite Rad der Radachse auf, so dass ein Sicherheitsmechanismus des Bremsenprüfstands überwunden wird und eine reguläre Bremsenprüfung simuliert wird. Der Sicherheitsmechanismus kann beispielsweise als Tastrollen ausgeführt sein, die den Betrieb des Bremsenprüfstands erst bei Radkontakt freigeben, wobei diese in der vorgenannten Radposition des Belastungsfahrzeugs auf beiden Seiten nach unten gedrückt werden kann. Somit ist lediglich die Kalibrierungsvorrichtung zwischen einem Fahrzeugrad und einem Rollenpaar des Prüfstands zwischengeschaltet. Wird das Rad des Fahrzeugs über die über Rampe gefahren, kippt das bodenseitige Ende der Rampe nach oben und kann am Unterboden des Fahrzeugs abgestützt werden. Somit nimmt die Rampe an zwei Punkten das Fahrzeuggewicht auf, wodurch eine noch höhere Gewichtskraft auf die Drehachse wirken kann. In diesem Fall könnte beim benachbarten Rollenpaar des Bremsenprüfstands ein Aufliegen eines Fahrzeugrades simuliert werden, d.h. ein Dummyrad oder dergleichen unterlegt werden, um einen Sicherheitsmechanismus zu überwinden. Durch ein Auf- oder Überfahren der Drehachse durch das Fahrzeugrad kann eine sehr hohe Gewichtskraft bis über 50% des Fahrzeuggewichts auf das Messrad ausgeübt werden, so dass dementsprechend hohe Bremskräfte ohne Durchrutschen gemessen werden können.

In einer vorteilhaften Weiterbildung kann ein Hebelabschnitt starr, insbesondere klappbar oder lösbar, an der Rampe befestigt sein, so dass der Hebelabschnitt und die Rampe eine um eine Drehachse des Messrades kippbare Anpresswippe bilden. Der Hebelabschnitt bildet sozusagen eine Verlängerung der Rampe über die Drehachse hinaus und ermöglicht es, durch eine bodengerichtete Belastung des Hebelabschnitts mit einer Hebelkraft die Drehachse und damit das Messrad zusätzlich zu der durch das Ballastgewicht aufgebrachten Gewichtskraft zu belasten. Der Hebelabschnitt kann insbesondere deutlich länger sein als eine Länge HI der Rampe, so dass bereits eine durch eine Person aufgebrachte Belastung des Hebelabschnitts zu einer merklichen Erhöhung der Anpresskraft des Messrades führen kann. So kann die auf das Messrad einwirkende Anpresskraft um ein Mehrfaches im Vergleich mit einer ausschließlich über die Rampe einwirkenden Anpresskraft erhöht werden. Durch eine klappbare oder lösbare Befestigung des Hebelabschnitts an der Rampe kann die Anpresswippe zu Transportzwecken auf ein kompaktes Maß zusammengeklappt oder zerlegt werden. Vorteilhafterweise ist die Länge HG des Hebelabschnitts veränderbar, beispielsweise durch eine teleskopartige Ausziehbarkeit oder mehrfache Klappbarkeit des Hebelabschnitts.

In einer vorteilhaften Weiterentwicklung der vorher beschriebenen Ausführung kann an einem bodenseitigen Ende der Rampe ein Bodenkontaktsensor angeordnet sein, der dazu ausgelegt ist, ein Abheben der bodenseitigen Abstützung der Rampe zu erfassen. Dadurch kann ermittelt werden, ob die vorstehend genannte bodengerichtete Belastung des Hebelabschnitts ausreichend groß ist oder - bei noch nicht erfolgtem Abheben - noch weiter erhöht werden sollte.

In einer vorteilhaften Weiterentwicklung kann ein Ballastgewicht vorgesehen sein, das sich gegenüber einer Bodenfläche auf dem Kraftmesssensor abstützt, wobei sich der Drehmomentarm derart entgegen einer von dem Ballastgewicht ausgeübten und von dem Kraftmesssensor erfassten Gewichtskraft an dem Ballastgewicht abstützt, wobei die während einer Bremsung des Messrades auftretende Gegenkraft zu einer Entlastung des Kraftmesssensors führt, und wobei die Gegenkraft auf der Grundlage einer hierdurch bewirkten Verminderung der von dem Kraftmesssensor erfassten Gewichtskraft ermittelt wird. Die während einer Bremsung des Messrades auftretende Gegenkraft wird somit in Form einer Differenzmessung ermittelt, wobei die Bremskraft zweckmäßigerweise durch Differenzbildung zwischen den Gewichtskräften bei ungebremstem und gebremstem Messrad ermittelt werden kann.

In einer vorteilhaften Weiterentwicklung der vorher beschriebenen Ausführungen kann das Ballastgewicht ein Kraftfahrzeug sein. Es ist dabei denkbar, dass das Messrad durch ein Fahrzeugrad gebildet sein kann, und dass die Bremseinrichtung auf das Fahrzeugrad wirkt, insbesondere die Bremseneinrichtung durch die Fahrzeugbremse bereitgestellt wird. Hierbei kann der Abstützpunkt, an welchem der Kraftmesssensor die Gegenkraft erfasst, durch ein anderes Fahrzeugrad gebildet sein.

In einer vorteilhaften Weiterentwicklung der Ausführungsform, bei welcher eine Rampe zur Aufnahme eines Ballastgewichts vorgesehen ist, kann der Drehmomentarm durch die Rampe gebildet sein, wobei sich die Rampe mit ihrem den Abstützpunkt aufweisenden anderen freien Ende gegenüber einer Bodenfläche auf dem Kraftmesssensor abstützt, oder der Kraftmesssensor sich zwischen dem Ende der Rampe und einem Unterboden des Fahrzeugs abstützt, sofern das Fahrzeug auf oder über der Drehachse auf die Rampe gefahren ist. Somit kann die Rampe als Drehmomentarm dienen und der Kraftmesssensor kann die auf die Rampe wirkende Gewichtskraftänderung bei einer Bremsung erfassen, oder eine Druckkraft, mit der die Rampe beim Überfahren des Fahrzeugrades über die Drehachse des Messrades hinaus beim Bremsen gegenüber dem Unterboden des Fahrzeugs presst.

Bevorzugt kann an der Rampe eine erste, parallel zu dem Messrad gelagerte Führungsrolle angeordnet sein, welche zusammen mit dem Messrad oder einer zweiten, parallel zu dem Messrad gelagerten und mit dem Messrad antriebsgekoppelten Führungsrolle eine zwischen dem Abstützpunkt und der Drehachse liegende Aufnahme für ein Fahrzeugrad bildet, wobei die Bremseinrichtung eine auf das Fahrzeugrad wirkende Bremseinrichtung des Fahrzeugs ist. Die Bremseinrichtung des Fahrzeugs bremst somit indirekt die Bremsenprüfrollen des Bremsenprüfstandes, wobei die auf die Rampe einwirkende Masse des Fahrzeugs ein Herausspringen der Kalibriervorrichtung aus dem Prüfstand verhindert. Wenn sich beispielsweise das Fahrzeug mit seinen Vorderrädern in der an der Rampe vorgesehenen Aufnahme befindet, während sich die Hinterräder des Fahrzeugs direkt auf der Bodenfläche abstützen, werden bei einer Bremsung der in der Kalibriervorrichtung befindlichen vorderen Fahrzeugräder die hinteren Fahrzeugräder entlastet und zugleich die vorderen Fahrzeugräder um ein entsprechendes Maß zusätzlich belastet. Diese Änderung der Lastverhältnisse kann durch den Kraftmesssensor erfasst werden.

In einer vorteilhaften Weiterentwicklung der vorstehend beschriebenen Ausführung kann die zweite Führungsrolle mit dem Messrad über ein Getriebe, insbesondere ein Ketten- oder Riemengetriebe, gekoppelt sein, welches eine gegebene Antriebsdrehzahl des Messrades in eine höhere Abtriebsdrehzahl der zweiten Führungsrolle übersetzt. Durch die Übersetzung sind die von der Bremseinrichtung des Fahrzeugs aufzubringenden Bremskräfte relativ klein, so dass die Gefahr eines Auftretens von Schlupf zwischen dem Fahrzeugrad und der zweiten Führungsrolle reduziert ist, so dass sich die Genauigkeit der Kalibrierung erhöht.

In einer vorteilhaften Weiterentwicklung kann der Durchmesser Dmr des Messrades größer dem Abstand Ar der Bremsprüfrollen und kleiner gleich 300% des Abstands Ar, insbesondere kleiner gleich 200% des Abstands Ar, bevorzugt 150% des Abstandes Ar der Bremsenprüfrollen betragen, um eine Keilwirkung zu bewirken. Unter dem Abstand Ar wird der Abstand zwischen den Umfangsflächen der Bremsenprüfrollen verstanden. So kann üblicherweise der Durchmesser von Bremsenprüfrollen ca. 20 cm betragen und deren Achsabstand kann 40 cm betragen, so dass der Abstand Ar 20 cm beträgt. Somit kann ein Messrad einen Durchmesser von größer 20 cm aber nicht größer als 60 cm, bevorzugt kleiner als 40 cm, insbesondere 30 cm oder 36 cm aufweisen, um eine Schlupfwirkung mittels einer Keilwirkung zu unterdrücken. Die Keilwirkung erhöht signifikant eine übertragbare Kraft zwischen Messrad und Bremsprüfrolle.

Somit kann sinngemäß von einer Erhöhung des Reibungskoeffizienten ($\mu$-Koeffizient, Reibungskoeffizient, auch Reibungszahl genannt (Formelzeichen $\mu$ oder $f$), ist ein dimensionsloses Maß für die Reibungskraft im Verhältnis zur Anpresskraft zwischen zwei Körpern) zwischen Messrad und Bremsenprüfrollen gesprochen werden, , die auch als $\mu$-Verstärkung bezeichnet werden kann, so dass ein das Messergebnis verfälschender Schlupf praktisch ausgeschlossen ist.

Somit kann ein wirksamer, effektiver Reibungskoeffizient $\mu'$, der die Keilwirkung berücksichtigt, definiert werden. Dieser berechnet sich nach der Gleichung:

$$\mu' = \frac{\mu}{\sin\frac{\gamma}{2}}$$

wobei $\gamma$ der Keilwinkel, d.h. der Winkel zwischen den Tangenten am Umfang des Messrades in den Aufstandspunkten des Messrades auf den Bremsenprüfrollen, und $\mu$ der materialspezifische Reibungskoeffizient ohne Ausnutzung der Keilwirkung ist.

Die folgende Tabelle zeigt einen Vergleich der durch die Ausnutzung der Keilwirkung bedingten Erhöhung des Reibungskoeffizienten, ausgedrückt durch das Verhältnis $\mu'/\mu$ der Reibungskoeffizienten, für zwei verschiedene Messraddurchmesser Dmr, wobei der Durchmesser der Bremsenprüfrollen 20 cm und deren Achsabstand 40 cm beträgt:

| Dmr [cm] | $\gamma$ [Grad] | $\mu'/\mu$ |
|---|---|---|
| 55 | 118 | 1,2 |
| 30 | 72 | 1,7 |

Der Messraddurchmesser Dmr von 55 cm entspricht annähernd dem Durchmesser eines üblichen KFZ-Rades, während der reduzierte Messraddurchmesser Dmr von 30 cm im Vergleich dazu eine Verbesserung des Reibungskoeffizienten von mehr als 40% bewirkt.

Ein kleinerer Messraddurchmesser bezogen auf eine gegebene Prüfrollengeometrie ist demnach nicht nur hinsichtlich eines verminderten Schlupfs vorteilhaft, sondern verhindert aufgrund der größeren Steigung der Tangenten am Umfang des Messrades und einer daraus resultierenden höheren Hangabtriebskraft, dass das Messrad bei hohen Bremskräften auf die Bremsenprüfrollen aufklettert und die Kalibrierungsvorrichtung aus dem Bremsenprüfstand geschoben wird.

In einer vorteilhaften Weiterentwicklung kann das Messrad ein gering bis nicht kompressibles Rad sein, insbesondere ein hartelastisches Rad und/oder ein Rad mit Kunststoffmantel, Vollgummimantel oder Metallmantel.

In einer vorteilhaften Weiterentwicklung kann eine zwischen einem Angreifpunkt der Bremseinrichtung und dem Abstützpunkt wirksame Länge des Drehmomentarms zur Einstellung des Messbereichs veränderbar sein.

In einer vorteilhaften Weiterentwicklung können zwei Messräder an Endbereichen einer gemeinsamen Drehachse, insbesondere einer die Drehachse bildenden Welle, angeordnet sein. Zwischen den Messrädern kann die Bremseinrichtung, insbesondere eine Scheibenbremseinrichtung, angeordnet sein. Hierdurch ist die empfindliche Bremsentechnik und ggf. weitere Messwertaufnehmer und der Kraftmesssensor sicher zwischen den Messrädern geschützt. Beide Messräder und die Bremsscheibe einer Scheibenbremseinrichtung können drehfest auf einer gemeinsamen Welle angeordnet sein.

In einer vorteilhaften Weiterentwicklung der vorherigen Ausführungsform kann der Abstand der Messräder voneinander derart gewählt sein, dass jedes der Messräder an einem jeweiligen axialen Endbereich der Bremsenprüfrollen aufsteht. Insbesondere kann der Abstand der Messräder voneinander größer als eine Breite eines durchschnittlich zu messenden Fahrzeugrades eines KFZs sein, so dass die Messräder an wenig abgenutzten Bereichen der Bremsenprüfrollen aufliegen können. Hierdurch kann eine Kraftübertragung an abgeriebenen Stellen der Bremsenprüfrollen vermieden werden und somit eine Schlupfneigung zusätzlich unterdrückt werden, so dass höhere Bremskräfte gemessen werden können. Durch den dabei gegebenen breiten Aufstand der Messvorrichtung, da die beiden Messräder maximal weit beabstandet auf den Bremsenprüfrollen aufliegen, wird ein Verkippen und eine Verfälschung eines Messergebnisses verhindert.

In einer vorteilhaften Weiterentwicklung kann die Kalibrierungsauswerteeinrichtung mit einer für eine Erfassung einer Videosequenz einer Bremskraft-Anzeigeeinrichtung des Bremsenprüfstandes vorgesehenen Videokamera verbunden sein, wobei die Kalibrierungsauswerteeinrichtung zum Aufzeichnen und Wiedergeben der Videosequenz und/oder zum Ermitteln von Bremskraft-Messwerten des Bremsenprüfstandes aus der Videosequenz und zum Vergleichen der Bremskraft-Messwerte mit den durch den Kraftmesssensor erfassten Messwerten eingerichtet ist. Eine derartige videogestützte Erfassung der Bremskraft-Messwerte des Bremsenprüfstandes ist insbesondere dann wichtig, wenn die Bremskraft-Messwerte des Bremsenprüfstandes nicht elektronisch (analog oder digital) ausgegeben werden können und/oder die Bremskraft-Anzeigeeinrichtung in den Kalibriervorgang mit einbezogen werden soll. Die Videosequenz und die Messwerte des Kraftmesssensors können insbesondere synchron aufgezeichnet werden oder können nachträglich synchronisiert werden. Abweichungen zwischen den vom Bremsenprüfstand und den von der Kalibriervorrichtung erfassten Messwerten können auf diese Weise elektronisch ermittelt werden.

In einer vorteilhaften Weiterentwicklung kann der Hebelabschnitt und / oder der Drehmomentarm in metallischer Leichtbauweise, insbesondere aus Aluminium-Strangpressprofilen ausgeführt sein, um ein geringes Gewicht und eine einfache Zusammensteckbarkeit der Kalibrierungsvorrichtung bereitzustellen. So kann z.B. die Anpresswippe zusammensteckbar und somit einfach montierbar ausgestaltet werden.

In einer vorteilhaften Weiterentwicklung kann die Kalibrierungsvorrichtung aus einem Set bestehen, umfassend eine in einem Auswertekoffer untergebrachte Kalibrierungsauswerteeinrichtung und eine Messrampe, die das bzw. die Messräder, die Bremseneinrichtung, den Drehmomentarm und den Kraftmesssensor umfasst, wobei elektrische Verbindungen zwischen Auswertekoffer und Messrampe steckbar ausgeführt sind. Damit wird eine mehrteilige und kompakte Bauweise der Kalibrierungsvorrichtung vorgeschlagen. Der Messkoffer kann die Auswertung der Bremsenmessung vornehmen und die Messrampe die mechanischen und beanspruchte Teile wie Messrad, Bremseneinrichtung und Drehmomentarm mit Kraftmesssensor, der in der Regel eine Kraftmessdose ist, aber auch ein anderer Kraft- oder Drehmomentsensor sein kann, der geeignet ist, die Größe einer Anpresskraft des Drehmomentarms an dessen Abstützpunkt direkt oder indirekt zu messen, wie bspw. ein Dehnungsmessstreifen, Torsionssensor, ein piezoelektrischer, magnetoelastischer oder optischer Sensor, Hydraulikdrucksensor oder andere Arten von Drehmomentaufnehmern. Die Messrampe kann mit zusätzlichen kleinen Rollen auf der Rampenseite zum leichteren Transport ausgestattet sein. Die beiden Teile können getrennt voneinander transportiert und aufgebaut und über Stecker-Kupplung-Verbindung elektrisch miteinander verbunden werden. Dabei dient eine elektrische Verbindung zum Betrieb des Kraftmesssensors, um die Drehmomentkraft aufzunehmen, eine Verbindung kann einen Hydraulikmotor einer einstellbaren hydraulischen Scheibenbremse steuern und über die Stromaufnahme indirekt auf einen Bremsdruck schließen und eine Verbindung kann einen Hydraulikdrucksensor auslesen, um die Bremskraft aus dem Hydraulikdruck der Bremse ableiten zu können. Die Messrampe kann ein Hydrauliksicherheitsventil umfassen, das bei Überlast öffnen kann, um eine Leckage oder Bruch des Hydrauliksystems bei übermäßiger Beanspruchung zu verhindern. Im Notfall kann so schnell die Bremswirkung aufgehoben werden. Über den Hydraulikmotor sind verschiedene Bremskräfte vorgebbar, so dass der Bremsenprüfstand beispielsweise beginnend bei 1 kN in 1 kN Abständen bis zu 6 kN oder 8 kN unterschiedlich starke Bremskräfte messen kann und eine Kalibrierung über den gesamten Messbereich durchgeführt werden kann. Der Auswertekoffer kann eine derartige Prüfung automatisiert durchführen, wobei beispielsweise eine Drahtlosverbindung, z.B. mittels WLAN, Bluetooth oder ähnlichem mit einem handgeführten Prüfanzeigegerät bestehen kann, so dass ein Prüfer bequem ohne mechanische Verbindung die Prüfung und Kalibrierung in sicherer Entfernung durchführen kann. Eine Prüfprotokollierung kann mittels eines Druckes im Auswertekoffer erfolgen. Die mehrteilige Form ermöglicht eine leichtgewichtige Ausführung, so dass ohne Beschwerden die Kalibrierungsvorrichtung transportiert und eingesetzt werden kann.

Zur Bestimmung der Bremskraft sind sowohl die Länge des Drehmomentarms als auch der Radius bzw. Durchmesser *Dmr* des Messrades sowie die gemessene Abstützkraft des Drehmomentarms notwendig. Die Länge des Drehmomentarms ist dabei der radiale Abstand von der Drehachse des Messrades bis zum Abstützpunkt des Drehmomentarms. Die Bremskraft *Fb* ergibt sich dann aus dem Verhältnis von Länge des Drehmomentarms *lh* zum Radius des Messrades *Dmr/2* skaliert mit der auf den Drehmomentarm wirkenden Abstützkraft *Fh*, sofern diese tangential zum Messradumfang gerichtet ist.

$$Fb = \frac{2 \cdot lh}{Dmr} \cdot Fh$$

In der Regel ist der Drehmomentarm durch einen L-förmigen Bügel gebildet, dessen kurze Schenkellänge h an der Drehachse des Messrads ansetzt und dessen lange Schenkellänge *l* zum Abstützpunkt des Drehmomentarms führt. In diesem Fall ergibt sich folgender vektoriell-mathematische Zusammenhang:

$$Fb = \cos\left(90° - \tan^{-1}\frac{l}{h}\right) * \frac{2 \cdot \sqrt[2]{l^2 + h^2}}{Dmr} * Fh$$

Zur Protokollierung der Kalibrierung kann vorteilhafterweise sowohl die Länge des Drehmomentarms *lh* bzw. *l* und *h* als auch der Durchmesser des oder der Messräder *Dmr* in die Kalibrierungsauswerteeinrichtung ggf. änderbar gespeichert und in jeder Messung protokolliert werden.

Der Durchmesser *Dmr* des Messrades ist von entscheidender Bedeutung für die Genauigkeit der von der Kalibrierungsvorrichtung erfassten Bremskraft und kann verschleißbedingt schwinden. So kann eine Durchmesserverringerung von z.B. 2mm eine Abweichung der gemessenen Bremskraft von über 0,5% bewirken. Vorteilhafterweise kann in der Kalibrierungsvorrichtung eine Überwachungseinrichtung des Messraddurchmessers umfasst sein. Die Überwachungseinrichtung kann beispielsweise ein drehfrei an der Achse des Messrades angeordnetes Überwachungsrad oder Überwachungsradsegment umfassen, dessen maximalen Radius geringfügig geringer als ein Sollradius des Messrades ist. Drehfrei bedeutet, dass eine Drehung der Messradachse unabhängig von einer Drehung des Überwachungsrades oder des Überwachungsradsegments erfolgen kann. Schwindet der Sollradius des Messrades berührt das Überwachungsrad bzw. Überwachungsradsegment die Bremsenprüfrollen und wird von diesen zumindest geringfügig angetrieben oder in Rotation versetzt. Der Radius kann vorzugsweise 2 bis 10 mm geringer als das Messrad sein. Vorteilhafterweise weist das Überwachungsrad oder das Überwachungsradsegment einen azentrischen Schwerpunkt auf, so dass dieses sich nicht selbstständig durch Reibungskräfte eines Lagers gegenüber der Messradachse drehen kann. Es kann ein Bewegungssensor, z.B. ein berührungsloser Messschalter, z.B. Reedkontakt etc. vorgesehen sein, der bei einer Bewegung des Überwachungsrades bzw. Überwachungsradsegments einen kritischen Schwund des Messrades signalisiert, so dass entweder der Messradius in der Kalibrierungsauswerteeinrichtung nachgeführt oder das Messrad ausgewechselt werden kann. Der Radius des Überwachungsrades oder der Überwachungsradsegments kann einstellbar sein, so dass bei Durchmesserschwund des Messrades und Nachjustierung der Kalibrierungsauswerteeinrichtung ein Nachführen des Überwachungsrades bzw. Überwachungsradsegment möglich ist.

Ein Schlupf des Messrades tritt an einer maximalen Messbereichsgrenze auf, wenn eine Bremskraft eine vom Messrad auf die Bremsprüfrollen wirkende Gewichtskraft gewichtet mit einem Haftreibungskoeffizienten überschreiten. In diesem Fall löst in der Regel eine Sicherheitsvorrichtung des Bremsenprüfstands auf. Zur Erhöhung der Betriebssicherheit und zur Detektion eines Schlupfs oder einer Schlupfneigung kann vorteilhafterweise ein weiteres, drehfreies Schlupfrad an der Achse des Messrades angeordnet sein, das aus einem kompressiblen, weichen Material besteht, z.B. einem weichelastischen Gummi oder einem mit Niederdruck gefüllten Luftreifen, dessen Durchmesser zumindest geringfügig größer als das Messrad ist. Dieses Schlupfrad dreht sich aufgrund des größeren Durchmessers auch im Schlupffall zumindest zeitweise angetrieben durch die Bremsenprüfrollen weiter, wobei sich im Schlupffall eine gegenüber dem Messrad abweichende Drehzahl ergibt. Da das Schlupfrad kompressibel ist, nimmt dieses praktisch keine Achslast auf, so dass die Andruckkraft des Messrades nicht beeinflusst wird. Die Drehzahl des Schlupfrades kann über einen Schlupfdrehzahlmesser und die Drehzahl des Messrades kann über einen Messraddrehzahlmesser, beispielsweise über einen magnetischen Drehzahlmesser ähnlich wie bei einem Fahrradtachometer bestimmt werden. Die Abweichung beider Drehzahlen bildet ein Maß für einen auftretenden Schlupf und kann von der Kalibrierungsauswerteeinrichtung ausgewertet werden. Im Falle einer Schlupfneigung kann die Bremskraft reduziert werden um einen übermäßigen Schlupf, der zur Notabschaltung des Bremsenprüfstands führen kann, zu verhindern. Auch kann durch eine kontrollierte Schlupfsimulation eine Funktion der Sicherheitsvorrichtung des Bremsprüfstands überprüft werden.

Das Schlupfrad und / oder das Überwachungsrad bzw. das Überwachungsradsegment können vorteilhafterweise auf einer Achse zwischen zwei Messrädern angeordnet sein. Bei einer Demontage der relativ schweren Messräder kann über das Schlupfrad oder das Überwachungsrad die Vorrichtung transportiert werden.

Nebengeordnet wird ein Verfahren zum Betreiben einer vorgenannten Kalibrierungsvorrichtung vorgeschlagen, welches die Schritte umfasst: Aufsetzen der Kalibrierungsvorrichtung auf den Bremsenprüfstand derart, dass das zumindest eine, bevorzugt zwei Messräder zwischen den Bremsenprüfrollen aufgenommen sind,
Antreiben des zumindest einen Messrades mittels der Bremsenprüfrollen, Betätigen der Bremseinrichtung zur steuerbaren Bremsung des zumindest einen Messrades, insbesondere mit einer einstellbaren Bremskraft, Ermitteln der während der Bremsung des Messrades auftretenden Gegenkraft mittels des Kraftmesssensors,
Übermitteln der durch den Kraftmesssensor erfassten Messwerte an die Kalibrierungsauswerteeinrichtung, und Ermitteln zumindest einer Bremskraft auf der Grundlage der erfassten Messwerte mittels der Kalibrierungsauswerteeinrichtung.

Vorteilhafterweise wird der Bremsenprüfstand auf der Grundlage eines Vergleichs zumindest einer durch die Kalibrierungsauswerteeinrichtung ermittelten Bremskraft mit einer korrespondierenden, von dem Bremsenprüfstand erfassten Bremskraft kalibriert oder geeicht. Unter einer korrespondierenden Bremskraft wird diejenige Bremskraft verstanden, die von dem Bremsenprüfstand zu dem gleichen Zeitpunkt, d.h. unter Einwirkung der derselben Bremskraft auf das Messrad, wie die von der Kalibrierungsvorrichtung bzw. deren Kalibrierungsauswerteeinrichtung ermittelte Bremskraft erfasst wurde.

Vorteilhafterweise weist die Kalibrierungsvorrichtung eine Rampe zur Aufnahme eines Fahrzeugs auf, wobei sich die Rampe mit ihrem einen Ende auf einer Drehachse des Messrades abstützt, wobei zur Erzeugung einer Anpresskraft Fa ein Fahrzeug mit einem Rad auf die Rampe gefahren wird. Somit wird ein Betreiben einer Kalibrierungsvorrichtung unter Belastung der Rampe durch ein Rad eines KFZs vorgeschlagen, um eine erforderliche, schlupfsichere Kopplung des Messrades mit den Bremsenprüfrollen sicherzustellen.

Vorteilhafterweise ist ein Hebelabschnitt starr, insbesondere klappbar oder lösbar, an der Rampe befestigt, so dass der Hebelabschnitt und die Rampe eine um eine Drehachse des Messrades kippbare Anpresswippe bilden, wobei durch Aufwendung einer Gegenkraft Fg auf den Hebelabschnitt der Anpresswippe ein Freischweben der bodenseitigen Abstützung der Rampe erreicht und somit der Messbereich erweitert wird. Ein Freischweben erreicht eine maximierende Wirkung auf die Verstärkung der Anpresskraft, aber auch schon durch eine Erhöhung einer Andruckkraft, d.h. ohne ein Freischweben der Rampe wird die Anpresskraft erhöht. Die Gegenkraft Fg kann dabei auf unterschiedliche Arten in die Anpresswippe eingeleitet werden. Eine Variante besteht darin, zum Zeitpunkt der Kalibrierung ein zusätzliches Ballastgewicht am Ende des Hebelabschnitts anzubringen, welches in einer zusätzlichen Druckkraft gegenüber der Bodenfläche resultiert. Alternativ ist es auch möglich, eine Zugkraft gegenüber der Bodenfläche wirken zu lassen. Diese kann beispielsweise durch einen Saugheber oder eine magnetische Zugvorrichtung realisiert werden. Kompakte Saugheber mit geeigneter Zugkraft werden beispielsweise als Verleghilfe für Betonplatten angeboten. Der erforderliche Unterdruck kann mittels eines Vakuuminjektors aus einer am Prüfort regelmäßig bereitstehen Druckluft generiert werden. Besteht aufgrund der auf den Hebelabschnitt einwirkenden Kraft an beiden Enden der Anpresswippe kein unmittelbarer Bodenkontakt, so wirken das Radgewicht des Fahrzeugs sowie die bodenseitig wirkende Hebelkraft des Hebelabschnitts auf das Messrad, so dass bereits ein relativ leichtgewichtiges Fahrzeug einen ausreichend hohen Anpressdruck des Messrades gegenüber den Bremsenprüfrollen sicherstellt, da das anteilige Fahrzeuggewicht eines Fahrzeugrades auf die Drehachse wirkt und eine hohe Reibkraft bereitstellt.

Vorteilhafterweise kann das Fahrzeug bis auf oder über die Drehachse gefahren werden, wobei sich dabei die Rampe gegenüber einem Unterboden des Fahrzeugs abstützt. Damit kann eine erhöhte Gewichtskraft des Fahrzeugs auf das mindestens eine Messrad wirken, so dass höhere Bremskräfte ohne Schlupf erreicht werden können. Wird das Fahrzeug direkt über der Drehachse des Messrades, bzw. der paarweise nebeneinander angeordneten Messräder, die derart beabstandet sind, dass sie auf den äußeren Bereiche der Prüfrollen laufen, positioniert, so stützt sich das benachbarte Achsrad des Fahrzeugs aufgrund des Federbeins auf das benachbarte Prüfrollenpaar des Bremsenprüfstandes ab. Damit wird eine Sicherheitseinrichtung, die ansonsten ein Anlaufen der Prüfrollen verhindert, überwunden und dem Bremsenprüfstand wird eine reguläre Bremsenprüfung simuliert.

Die einzelnen Merkmale können selbstverständlich untereinander kombiniert werden, wobei sich weitere vorteilhafte Wirkungen einstellen können, die über die Summe der Einzelwirkungen hinausgehen.

ZEICHNUNGEN

Weitere Vorteile ergeben sich aus den vorliegenden Zeichnungsbeschreibungen. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1    schematisch eine erste Ausführungsform einer Kalibrierungsvorrichtung zur Kalibrierung eines Bremsenprüfstands,

Fig. 2    schematisch eine perspektivische Detailansicht der Kalibrierungsvorrichtung von Fig. 1,

Fig. 3    schematisch eine zweite Ausführungsform einer Kalibrierungsvorrichtung zur Kalibrierung eines Bremsenprüfstands,

Fig. 4    schematisch eine dritte Ausführungsform einer Kalibrierungsvorrichtung zur Kalibrierung eines Bremsenprüfstands.,

Fig. 5    schematisch eine vierte Ausführungsform einer Kalibrierungsvorrichtung zur Kalibrierung eines Bremsenprüfstands,

**Fig. 6** schematisch eine fünfte Ausführungsform einer Kalibrierungsvorrichtung zur Kalibrierung eines Bremsenprüfstands, und

**Fig. 7** ein Blockschaltbild der elektrischen Konfiguration einer Ausführungsform einer Kalibrierungsvorrichtung.

In den Figuren sind gleiche oder gleichartige Komponenten mit gleichen Bezugszeichen beziffert.

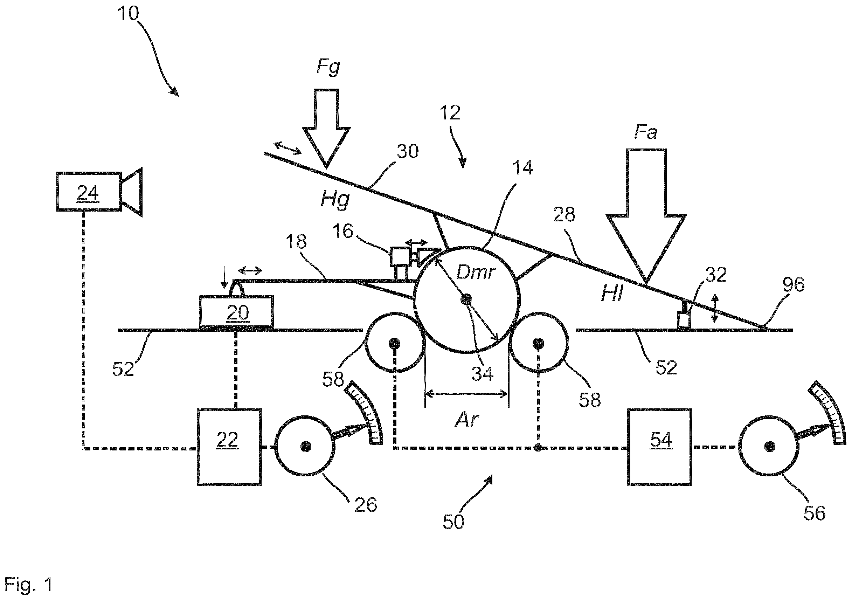

Fig. 1 zeigt einen Bremsenprüfstand 50, der zwei um einen Abstand Ar parallel drehbar gelagerte Bremsenprüfrollen 58 umfasst, zwischen denen ein Rad eines Kraftfahrzeuges aufgenommen werden kann, um eine auf das Rad einwirkende Bremskraft zu erfassen. Eine zu messende Bremskraft, die bei Antrieb der Bremskraftrollen 58 durch eine zu messende Verzögerungswirkung erfasst werden kann, wird durch Drehzahl- oder Drehbeschleunigungssensoren an eine Bremskraft-Auswertungseinrichtung 54 weitergegeben, und auf einer Bremskraft-Anzeigeeinrichtung 56 dargestellt. Somit kann eine ordnungsgemäße Funktion einer Kraftfahrzeugbremse überprüft werden.

Um eine exakte und nachvollziehbare Bremskrafterfassung des Bremsenprüfstands 50 bereitzustellen, wird der Bremsenprüfstand 50 mittels einer Kalibrierungsvorrichtung 10 überprüft und wie nachfolgend beschrieben kalibriert oder geeicht.

Die Kalibrierungsvorrichtung 10 umfasst gemäß einer ersten Ausführungsform eine Anpresswippe 30, die eine Rampe 28 aufweist. Die Rampe 28 stützt sich mit ihrem einen Ende sich über ein Achsgestell oder dergleichen an einer als Welle ausgebildeten Drehachse 34 ab, wobei zwei Messräder 14 an Endbereichen der Welle drehfest befestigt sind. Das andere Ende der Rampe 28 stützt sich auf einer Bodenfläche 52 ab. Des Weiteren umfasst die Anpresswippe 10 einen am Achsgestell, an der Welle oder an der Rampe 28 angelenkten Drehmomentarm 18, der sich mit seinem freien Ende auf einen Kraftmesssensor 20, beispielsweise einer Kraftmessdose, einem Dehnungsmessstreifen-Kraftaufnehmer oder ähnliche Drehmomentaufnehmer oder Kraftaufnehmer, abstützt. Der Kraftmesssensor 20 ist zur Signalauswertung mit einer Kalbrierungsauswerteeinrichtung 22 verbunden, die eine Hebelkraftbeaufschlagung durch den Drehmomentarm 18 erfassen und hieraus ein Drehmoment bzw. eine Bremskraft bestimmen und durch eine Kalibrierkraft-Anzeigeeinrichtung 26 ausgeben kann.

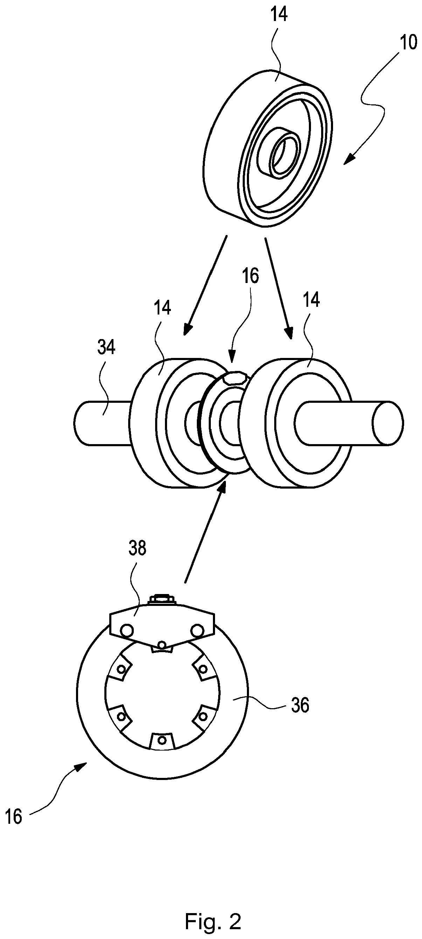

Die Messräder 14 sind hartelastische bzw. unelastische Räder, die bevorzugt an äußeren Randbereichen der Bremsenprüfrollen 50 aufsetzen, deren Oberfläche gering belastet ist und üblicherweise nicht von KFZ-Rädern abgenutzt wird. Die Messräder 14 weisen, wie Fig. 2 näher zeigt, jeweils einen Kern aus Metall sowie einen die Lauffläche aufweisenden hartelastischen Kunststoff- oder Vollgummimantel auf, welcher vorteilhaft eine profilierte Oberfläche zur Verbesserung eines Kontaktschlusses mit den Bremsenprüfrollen 50 zur Vermeidung von Schlupf besitzt. Der Durchmesser Dmr der Messräder 14 ist derart gewählt, dass sie relativ tief zwischen den beiden Bremsenprüfrollen 58 eintauchen, um eine Keilwirkung auszunutzen. In der Regel sind die Messräder 14 deutlich kleiner als ein Fahrzeugrad ausgebildet, und der Durchmesser kann z.B. das 1,5-fache des Abstandes Ar zwischen den Bremsenprüfrollen 50 betragen.

An der Welle oder am Messrad 14 greift eine Bremseinrichtung 16 an, die mit dem Drehmomentarm 18 mechanisch verbunden ist.

Gemäß Fig. 2 kann die Bremseinrichtung 16 als eine hydraulische Scheibenbremse mit einer Bremsscheibe 36 und einem Bremssattel 38 ausgebildet sein. Die Bremsscheibe 36 ist drehfest an der Welle befestigt und zwischen den Messrädern 14 positioniert. Der Bremssattel 38 ist an dem Drehmomentarm 18 befestigt oder mit diesem zumindest kraftschlüssig gekoppelt, so dass sich der Bremssattel 38 an dem Drehmomentarm 18 abstützen kann. Eine Ansteuerung der Bremseinrichtung 16 kann z.B. mittels der Kalibrierungsauswerteeinrichtung 22 erfolgen.

Wird die Bremseinrichtung 16 betätigt, bewirkt die kraftschlüssige Kopplung zwischen den Messrädern 14 und den Bremsenprüfrollen 58 ein Abbremsen der Bremsenprüfrollen 58, so dass durch die Bremskraft-Anzeigeeinrichtung 56 des Bremsenprüfstandes 50 eine Bremskraft angezeigt wird.

Durch die Bremskraft erfolgt, da die Bremseinrichtung 16 starr mit dem Drehmomentarm 18 gekoppelt ist, eine Drehmomentbeaufschlagung des Drehmomentarms 18, der entsprechend der Bremskraft eine Kraft auf den Kraftmesssensor 20 ausübt.

Zur Skalierung bzw. Messbereichserweiterung kann die Länge des Drehmomentarms 18 einstellbar sein, um den gesamten Bremskraft-Messbereich erfassen zu können, und sowohl geringe als auch sehr hohe Bremskräfte messen zu können.

Die Kalibrierungsauswerteeinrichtung 22 kann mit einer für eine Erfassung einer Videosequenz der Bremskraft-Anzeigeeinrichtung 56 des Bremsenprüfstandes 50 vorgesehenen Videokamera 24 verbunden sein, wobei die Kalibrierungsauswerteeinrichtung 22 zum Aufzeichnen und Wiedergeben der Videosequenz und/oder zum Ermitteln von Bremskraft-Messwerten des Bremsenprüfstandes 50 aus der Videosequenz und zum Vergleichen der Bremskraft-Messwerte mit den durch den Kraftmesssensor 20 erfassten Kraft-Messwerten eingerichtet ist, wobei der Hebelabschnitt 30 des Drehmomentarms 18 berücksichtigt wird. Das Ermitteln der Bremskraft-Messwerte des Bremsenprüfstandes 50 aus der Videosequenz kann mithilfe geeigneter Bildverarbeitungsalgorithmen erfolgen.

Alternativ oder zusätzlich können auch die von der Bremskraft-Auswertungseinrichtung 54 ermittelten Bremskraft-Messwerte elektronisch an die Kalibrierungsauswerteeinrichtung 22 übertragen werden.

Ein Vergleich der vom Kraftmesssensor 20 aufgenommenen Messwerte unter Berücksichtigung des wirksamen Hebelabschnitts 30 des Drehmomentarms 18 mit der durch die Bremskraft-Auswertungseinrichtung 54 ermittelten bzw. von der die Bremskraft-Anzeigeeinrichtung 56 angezeigten Bremskraft kann genutzt werden, um die Genauigkeit des Bremsenprüfstand 50 zu überprüfen bzw. zu kalibrieren, der somit auch geeicht werden kann.

Zur Bereitstellung einer hohen Anpresskraft der Messräder 14 auf den Bremsenprüfrollen 58 wird auf der Rampe 28 eine hohe Gewichtskraft Fa, beispielsweise durch ein Rad eines PKWs oder LKWs aufgebracht. Die Gewichtskraft verteilt sich auf die bodenseitige Abstützung 96 und die Lagerung an der Drehachse 34.

Zur weiteren Steigerung der Anpresskraft, die eine Erweiterung des Messbereichs ermöglicht, kann am Hebelabschnitt 30 eine weitere Gewichtskraft Fg, z.B. durch ein manuelles Herunterdrücken oder ein Einspannen des Hebelabschnitts 30 in Richtung der Bodenfläche 52 erzeugt werden. Hierdurch wird die Auflagekraft der bodenseitigen Abstützung verringert und somit die Kraftableitung auf die Drehachse 34 erhöht, bis die bodenseitige Abstützung der Rampe 28 aufgehoben ist.

Mit einer Erhöhung der Anpresskraft kann ein Aufklettern der Messräder 14 auf die Bremsenprüfrollen 58 vermieden werden, wodurch der Bremskraft-Messbereich der Kalibrierungsvorrichtung 10 praktisch verdoppelt werden kann, so dass auch Endbereiche des Bremskraftmessbereichs kalibriert werden können. Vorzugsweise ist hierbei die Länge des Hebelabschnitts 30 veränderbar, so dass eine geringe Hebelkraft Fg ausreicht, um ein bodenseitiges Freischweben des bodenseitigen Endes der Rampe 28 zu erreichen. Des Weiteren kann der Abstand des Hebelabschnitt 30 zum Kraftmesssensor 20 zur Einstellung einer Ruhestellung einstellbar ausgeführt werden, um das auftretende Drehmoment einzustellen und somit weiterhin eine Bremskraftskalierung zu erreichen.

Es kann vorteilhaft ein Bodenkontaktsensor 32 vorgesehen sein, der ein bodenseitiges Freischweben der Anpresswippe 12 anzeigt, so dass die Einhaltung einer maximalen Anpresskraft signalisiert werden kann. Wird stattdessen die Anpresswippe 12 an einem Unterboden eines Fahrzeugs 46 abgestützt, kann der Bodenkontaktsensor 32 oder ein zwischen Anpresswippe 12 und Fahrzeugunterboden angebrachter Kontaktsensor eine korrekte Betriebslage der Anpresswippe 12 signalisieren.

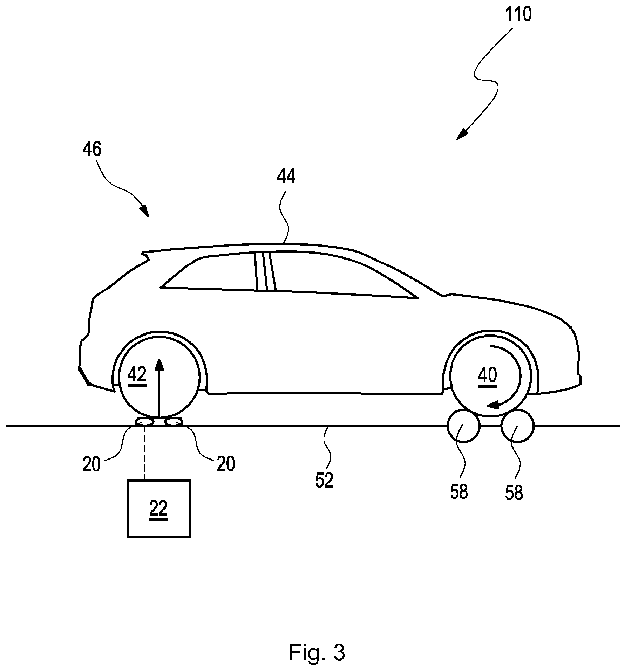

Fig. 3 zeigt eine Kalibrierungsvorrichtung 110 gemäß einer zweiten Ausführungsform. Die Kalibrierungsvorrichtung 110 umfasst ein Fahrzeug 46 mit einer Karosserie 44, vorderen Fahrzeugrädern 40 und hinteren Fahrzeugrädern 42. Ein vorderes Fahrzeugrad 40 übernimmt die Funktion des Messrades, während die Karosserie 44 als Drehmomentarm dient. Ein hinteres Fahrzeugrad 42 steht auf zwei Kraftmesssensoren 20 auf, welche mit der Kalibrierungsauswertungseinrichtung 22 verbunden sind. Die Kraftmesssensoren 20 messen eine Gewichtskraft, die durch das Gewicht des Fahrzeugs 46 an dem durch die Aufstandsfläche des hinteren Fahrzeugrades 42 gebildeten Abstützpunkt des Drehmomentarms aufgebracht wird. Die Bremseinrichtung wird durch die auf das vordere Fahrzeugrad 44 wirkende Bremseinrichtung des Fahrzeugs (nicht dargestellt) gebildet.

Zur Durchführung einer Kalibrierung werden die Bremsenprüfrollen 58 angetrieben und das als Messrad dienende vordere Fahrzeugrad 40 durch Betätigen der Bremseinrichtung des Fahrzeugs abgebremst. Da sich die Bremseinrichtung an der Karosserie 44 abstützt, wirkt auf die Karosserie 44 ein Drehmoment, welches zu einer Entlastung des hinteren Fahrzeugrades 42 führt. Die daraus resultierende Verminderung der Gewichtskraft wird durch die Kraftmesssensoren 20 registriert, so dass die Bremskraft durch Differenzbildung ermittelt werden kann. Vorteilhafterweise können die Gewichtskräfte der übrigen drei nicht gebremsten Räder 42 mit Kraftmessdosen 20 gemessen werden. Es ist weiterhin vorteilhaft, wenn das Vorderrad 40 eine breite Hartgummirolle mit im Vergleich zum Originalrad vermindertem Durchmesser ist, um eine Keilwirkung zu erzielen und einem Schlupf entgegenzuwirken.

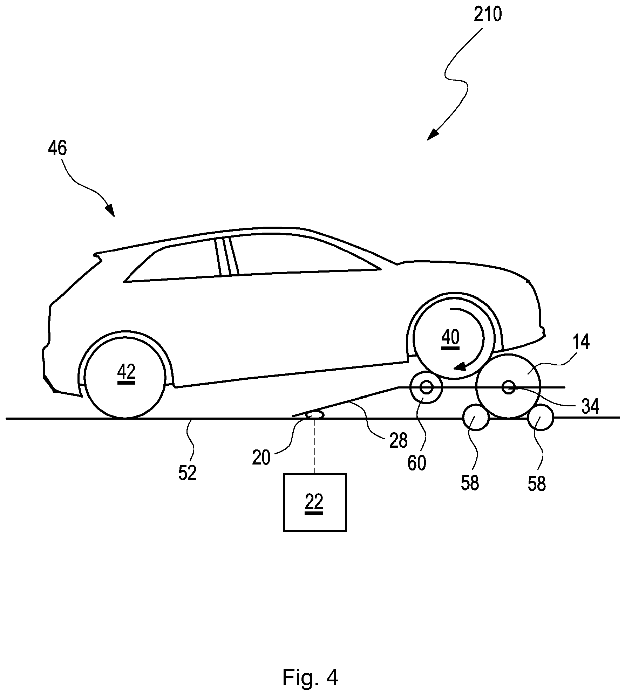

Fig. 4 zeigt eine Kalibrierungsvorrichtung 210 gemäß einer dritten Ausführungsform. Die Kalibriereinrichtung 210 umfasst eine Rampe 28, welche sich einerseits über einen Kraftmesssensor 20 an einer Bodenfläche 52 und andererseits an einer Drehachse 34 eines Messrades 14 abstützt. Das Messrad 14 ist analog zu der Ausführungsform gemäß Fig. 1 zwischen zwei Bremsenprüfrollen 58 eines Bremsenprüfstandes aufgenommen.

An der Rampe 28 ist von dem Messrad 14 beabstandet eine erste Führungsrolle drehbar gelagert, welche zusammen mit dem Messrad 14 eine Aufnahme für ein vorderes Fahrzeugrad 40 eines Fahrzeugs 46 bildet. Der zwischen der Drehachse 34 und dem Abstützpunkt am Kraftmesssensor 20 gelegene Teilabschnitt der Rampe 28 bildet einen Drehmomentarm. Als Bremseinrichtung dient eine auf das vordere Fahrzeugrad 40 einwirkende Bremseinrichtung des Fahrzeugs 46. Der Kraftmesssensor 20 ist wiederum mit einer Kalibrierungsauswerteeinrichtung 22 verbunden.

Zur Durchführung einer Kalibrierung werden die angetriebenen Bremsenprüfrollen 58 durch Betätigen der Bremseinrichtung des Fahrzeugs 46 indirekt über das vordere Fahrzeugrad 40 und das mit dem vorderen Fahrzeugrad 40 und den Bremsenprüfrollen 58 zusammenwirkende Messrad 14 abgebremst. Diese Abbremsung führt wie bei der zweiten Ausführungsform gemäß Fig. 3 zu einer Entlastung eines hinteren Fahrzeugrades 42 des Fahrzeugs 46, wodurch sich entsprechend die auf das vordere Fahrzeugrad 40 einwirkende Gewichtskraft erhöht. Diese Änderung der Gewichtskraft wird durch den Kraftmesssensor 20 erfasst, so dass die Bremskraft wiederum mittels Differenzbildung bestimmt werden kann.

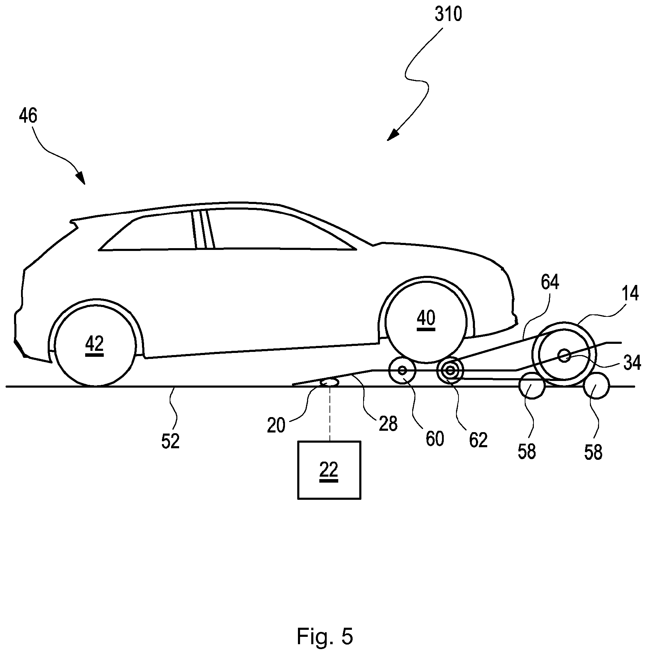

Eine Kalibrierungsvorrichtung 310 gemäß einer vierten Ausführungsform ist in Fig. 5 dargestellt. Die Kalibrierungsvorrichtung 310 entspricht in ihrem Funktionsprinzip und ihrem grundlegenden Aufbau der Kalibrierungsvorrichtung 210 von Fig. 4, so dass im Folgenden lediglich die Unterschiedsmerkmale und die daraus resultierenden Vorteile erläutert werden.

Gegenüber der Kalibrierungsvorrichtung 210 weist die Rampe 28 der Kalibrierungsvorrichtung 310 eine etwas größere Baulänge auf, wobei die erste Führungsrolle 60 etwas weiter von dem Messrad 14 beabstandet ist und zwischen der ersten Führungsrolle 60 und dem Messrad 14 eine zweite Führungsrolle 62 gelagert ist, welche zusammen mit der ersten Führungsrolle 60 eine Aufnahme für ein vorderes Fahrzeugrad 40 eines Fahrzeugs 46 bildet. Die zweite Führungsrolle 62 ist über einen als Getriebe wirkenden Kettenantrieb 64 mit dem Messrad 14 antriebsgekoppelt, wobei eine gegebene Antriebsdrehzahl des Messrades 14 in eine höhere Abtriebsdrehzahl der zweiten Führungsrolle 62 übersetzt wird.

Im Vergleich mit der Kalibrierungsvorrichtung 210 (Fig. 4) weist die Kalibrierungsvorrichtung 310 eine geringere Neigung der Rampe 28 auf, wodurch das Auffahren des Fahrzeugs 46 erleichtert wird. Ferner sind aufgrund der Übersetzung durch den Kettenantrieb 64 die von der Bremseinrichtung des Fahrzeugs 46 aufzubringenden Bremskräfte wesentlich kleiner, was die Gefahr des Auftretens von Schlupf oder des Aufkletterns deutlich verringert.

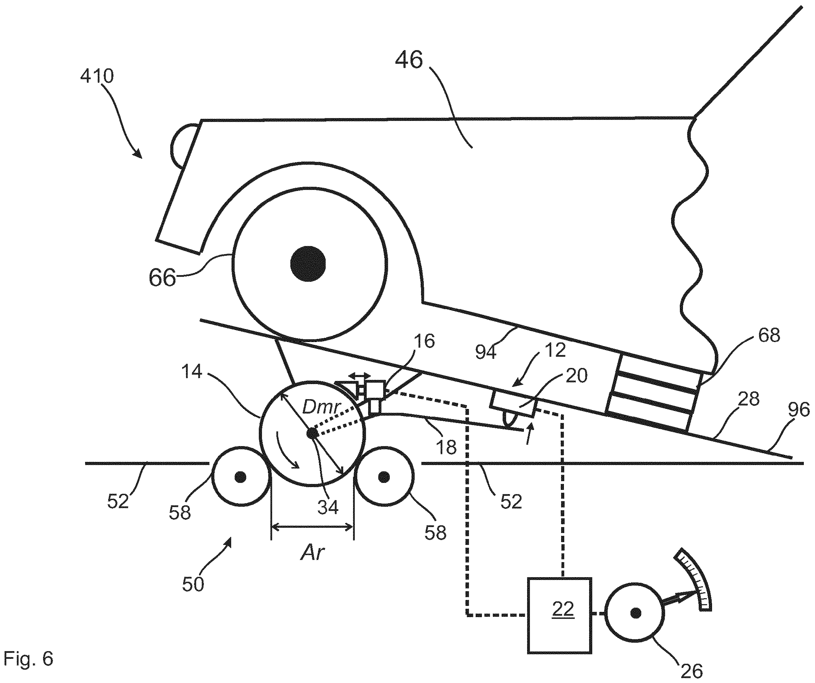

Die Fig. 6 zeigt eine weitere Ausführungsform 410 einer Kalibrierungsvorrichtung. Im Wesentlichen entspricht diese der in Fig. 1 dargestellten Ausführungsform, allerdings ist der Drehmomentarm 18 nicht auf einer Bodenfläche 52 sondern auf einer Unterseite der Rampe 28 abgestützt. Auf der Unterseite der Rampe 28 ist hierzu der Kraftmesssensor 20 angesetzt, der das Drehmoment aufnimmt, dass bei Betätigung der Bremseinrichtung 16, vorzugsweise eine hydraulische Scheibenbremse mit einstellbarer Bremskraft auf den Drehmomentarm 18 ausgeübt wird. Dadurch, dass sich der Drehmomentarm 18 nicht auf der Bodenfläche 52 sondern auf der Rampe 28 der Anpresswippe 12 abstützt, wird während des Bremsvorgangs kein Gewichtskraft außerhalb der Rampe 12 abgeleitet, so dass das auf das Messrad 14 wirkende Kraft nicht vermindert wird. Der Drehmomentarm 18 kann dabei kompakt ausgeführt werden und eine Länge von 30cm bis 50 cm haben. Somit können höhere Bremskräfte auf dem Bremsenprüfstand 50 ausgeübt werden. Ein Fahrzeug 46 ist mit seinem Vorderrad 66 so auf der Rampe 28 aufgefahren, dass das Rad 66 vertikal über der Drehachse 34 des Messrades 14 steht. Somit wird das achsparallele zweite Vorderrad entlastet, und steht mit dem Federbein auf dem parallel benachbarten zweiten Bremsenprüfstand 50 auf, so dass eine darin vorgesehene Sicherheitsvorrichtung freigegeben und der Bremsenprüfstand 50 funktionsfähig ist. In dieser Lageposition des Vorderrades befindet sich die Anpresswippe 12 in einer kinematisch instabilen Lage, wobei bei einer Bremsenbetätigung das Ende 96 der Rampe 28 gegen einen Unterboden 94 des Fahrzeugs 46 gepresst wird. Hierzu können Stützkörper 68 untergeschoben werden, um eine kinematisch definierte Position der Rampe 28 zu erreichen. Beim Bremsen presst die Rampe 28 gegen das Fahrzeug, was den weiteren Vorteil bewirkt, dass das auf das Rad 66 lastende Fahrzeuggewicht nun vollständig über das Messrad 14 abgeleitet und somit eine hoher Anpressdruck auf die Bremsprüfrollen 58 erreicht werden kann. Da das zweite Vorderrad entlastet ist, können somit bis zu 50% des Fahrzeuggewichts auf das Messrad 14 geleitet werden. Wird das Rad 66 des Fahrzeugs 46 direkt über die Drehachse 34 positioniert, so stützt sich das Fahrzeug sowohl über das Rad 66 als auch über das Ende 96 der die Bodenhaftung verlierenden Rampe 28, wobei der Schwerpunkt des Fahrzeugs 46 näher zur Drehachse 34 rückt, und es wird durch die zusätzliche Abstützung der Rampe 28 im Endbereich 96 nahe des Fahrzeugschwerpunktes anteilig mehr Kraft auf das Messrad 14 übertragen . Somit können Gewichtskräfte > 50 % des Fahrzeugs 46 auf das Messrad 14 ausgeübt werden, wodurch weiterhin höhere Bremskräfte messbar werden.

Wird das Vorderrad 66 des Fahrzeuges 46 weiter über die Drehachse 34 gefahren, so kann in diesem Fall ein achsparalleler benachbarter Bremsenprüfstand 50 mit einem Dummyrad oder einer anderen Vorrichtung belastet werden, um eine Sicherheitsfunktion des Bremsenprüfstands 50 zu umgehen.

Die Kalibrierungsauswerteeinrichtung 22 ist mit dem Kraftmesssensor 20 und der Bremseinrichtung 16 verbunden. Sie kann die Bremskraft der Bremseneinrichtung 16 einstellen, z.B. durch eine elektrische Parametrierung einer Hydraulikpumpe 74 und kann die Bremskraft indirekt z.B. über eine Stromaufnahme der Hydraulikpumpe 74 oder einen Hydraulikdruck durch einen Hydraulikdrucksensor 80 bestimmen. Somit kann die Kalibrierungsauswerteeinrichtung 22 einen einstell- und regelbaren Bremsdruck der Bremseneinrichtung 16 vorgeben und die dabei auf den Kraftmesssensor 20 wirkende Drehmoment erfassen. Das erfasste Drehmoment kann durch Division durch die Länge des Drehmomentarms 18 in Bezug auf die Drehachse 34 in eine Bremskraft umgerechnet werden. Die Bremskraft kann in mehreren Intervallen bis zur messtechnischen Endgrenze des Bremsenprüfstands 50, beispielsweise bis 6 kN oder 8 kN bestimmt werden und hiermit eine Überprüfung und Kalibrierung des Bremsenprüfstands 50 durchgeführt werden.

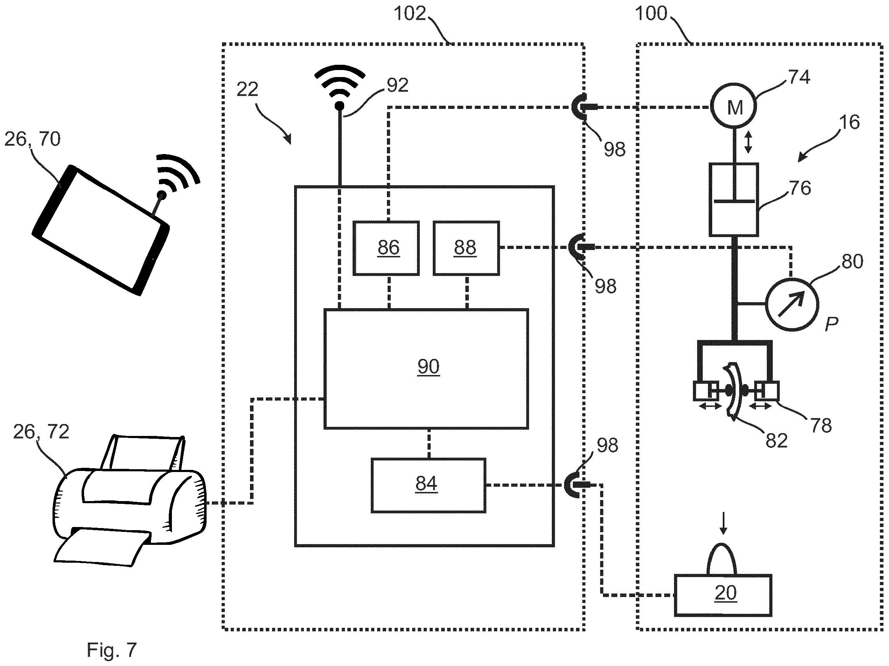

In der Fig. 7 ist ein Blockschaltbild der elektrischen Konfiguration eines Ausführungsbeispiels 10, 110, 210, 310 oder 410 dargestellt. Zentraler Bestandteil ist die Kalibrierungsauswerteeinrichtung 22, die beispielsweise als Koffergerät 102 ausgeführt sein kann. Diese weist ein Drahtlosinterface 92 z.B. als WLAN, Bluetooth oder ähnliche Luftschnittstelle zur bidirektionalen Kommunikation mit einer Kalibrierkraft-Anzeigeeinrichtung 26, die als handgehaltenes Prüfanzeigegerät 70, beispielsweise als Tablet, Smartphone oder Notebook von einer prüfenden Person in sicherem Abstand bedient werden kann. Zur Protokollierung kann gleichwohl im Koffergerät oder extern ein Prüfprotokollgerät 72, bspw. In Form eines Druckers als weitere Kalibrierkraft-Anzeigeeinrichtung 26 an die Kalibrierungsauswerteeinrichtung 22 angeschlossen werden.

Über eine oder mehrere lösbare Stecker-Buchsen-Verbindungen 98 ist die Kalibrierungsauswerteeinrichtung 22 an die elektromechanischen Komponenten der Messwippe 100 angeschlossen. Diese umfassen einen Hydraulikmotor 74, der einen Hydraulikdruck innerhalb einem Hydraulikzylinder 76 einstellen kann. Über Hydraulikleitungen wird dieser an hydraulische Bremsenaktuatoren 78 geleitet, die eine einstellbare Bremskraft auf eine Bremsscheibe 82 der Bremseneinrichtung 16 ausübt. Ein Hydraulikdrucksensor 80 überwacht den Hydraulikdruck, so dass Informationen über den Bremsdruck zum einen über den Hydraulikdrucksensor 80 und über den Motorstrom der Hydraulikpumpe 74 an die Kalibriereinrichtung 22 rückgeliefert werden kann. Optional kann ein Hydrauliknotventil vorgesehen sein, die eine Überlastung der Bremseneinrichtung 16 verhindert.

Der Hydraulikmotor 74 wird über eine Motor-Steuereinrichtung 86 gesteuert, bis ein gewünschter Bremsdruck eingestellt ist. Dieser kann über einen von der Motor-Steuereinrichtung 86 erfassten Motorstrom oder über eine Druckinformation des Hydraulikdrucksensors 80, der von einer Druckmesseinrichtung 88 ausgelesen wird, bestimmt werden. Beim Abweichen der beiden Werte Motorstrom und Hydraulikdruck kann eine Fehlfunktion der Messrampe 100 diagnostiziert werden.

Die vom Kraftmesssensor 20 aufgenommene Kraft, die einem Drehmoment entspricht, wird von einer Drehmoment-Auswerteeinrichtung 84 in eine Bremskraft bei Kenntnis der Länge des Hebelabschnitts 30 des Drehmomentarms 18 umgerechnet. Alle Daten werden von einer Recheneinheit 90 verarbeitet und können intern oder extern protokolliert, angezeigt oder verändert werden. Über eine entsprechende Softwareanwendung können über das Prüfanzeigegerät 70 Werte ausgelesen und Bremskräfte eingestellt werden.

Die Erfindung ermöglicht eine Überprüfung und Kalibrierung eines Bremsprüfstandes durch eine kompakte und einfach zu transportierende und schnell anwendbare mobile Kalibrierungsvorrichtung. Eine Anpresskraft des oder der Messräder kann in weiten Bereichen eingestellt werden und eine schlupffreie und exakte Erfassung der Bremskraft durch die Kalibrierungsvorrichtung ist möglich. Viele Fehlerquellen bisheriger Kalibrierungsvorrichtungen sind umgangen und eine kostengünstige und genaue Überprüfung von Bremsenprüfständen bis zu den maximalen Endbereichen der erfassbaren Bremskraft ist möglich.

**Bezugszeichenliste**

| | |
|---|---|
| 10,110, 210, 310, 410 | Kalibrierungsvorrichtung |
| 12 | Anpresswippe |
| 14 | Messrad |
| 16 | Bremseinrichtung |
| 18 | Drehmomentarm |
| 20 | Kraftmesssensor |
| 22 | Kalibrierungsauswerteeinrichtung |
| 24 | Videokamera |
| 26 | Kalibrierkraft-Anzeigeeinrichtung |
| 28 | Rampe |
| 30 | Hebelabschnitt |
| 32 | Bodenkontaktsensor |
| 34 | Drehachse |
| 36 | Bremsscheibe |
| 38 | Bremssattel |
| 40 | vorderes Fahrzeugrad |
| 42 | hinteres Fahrzeugrad |
| 44 | Karosserie |
| 46 | Fahrzeug |
| 50 | Bremsenprüfstand |
| 52 | Bodenfläche |
| 54 | Bremskraft-Auswertungseinrichtung |
| 56 | Bremskraft-Anzeigeeinrichtung |
| 58 | Bremsenprüfrolle |
| 60 | erste Führungsrolle |
| 62 | zweite Führungsrolle |
| 64 | Kettenantrieb |
| 66 | Rad des Belastungsfahrzeugs |
| 68 | Stützkörper |

| 70 | Prüfanzeigegerät |
|---|---|
| 72 | Prüfprotokollgerät |
| 74 | Hydraulikpumpe |
| 76 | Hydraulikzylinder |
| 78 | Hydraulischer Bremsenaktuator |
| 80 | Hydraulikdrucksensor |
| 82 | Bremsscheibe |
| 84 | Drehmoment-Auswerteeinrichtung |
| 86 | Motor-Steuereinrichtung |
| 88 | Druckmesseinrichtung |
| 90 | Recheneinheit |
| 92 | Drahtlosinterface |
| 94 | Unterboden des Fahrzeugs |
| 96 | Bodenseitiges Ende der Rampe |
| 98 | Lösbare Stecker-Buchsen-Verbindung |
| 100 | Messrampe |
| 102 | Auswertekoffer |

## Patentansprüche

1. Kalibrierungsvorrichtung (10, 110, 210, 310, 410) für einen Bremsenprüfstand (50), wobei der Bremsenprüfstand (50) zumindest ein Paar von um einen Abstand Ar parallel gelagerten Bremsenprüfrollen (58), zumindest ein mit den Bremsenprüfrollen (58) zusammenwirkendes Messrad (14), eine Bremseinrichtung (16) zur steuerbaren Bremsung des Messrades (14), einen Drehmomentarm (18), über welchen die Bremseinrichtung (16) zum Ableiten einer während einer Bremsung des Messrades (14) auftretenden Gegenkraft in einem Abstützpunkt abgestützt ist, zumindest einen Kraftmesssensor (20), welcher dazu ausgelegt ist, die am Abstützpunkt wirksame Gegenkraft zu ermitteln, und eine mit dem Kraftmesssensor (20) gekoppelte Kalibrierungsauswerteeinrichtung (22) zur Verarbeitung und/oder Darstellung von durch den Kraftmesssensor (20) erfassten Messwerten aufweist, **dadurch gekennzeichnet, dass** sich die Bremseinrichtung (16) über den Drehmomentarm (18) gegenüber einer Bodenfläche (52) auf dem Kraftmesssensor (20) abstützt oder durch eine Rampe (28), wobei sich die Bremseinrichtung (16) über den Drehmomentarm (18) auf dem Kraftmesssensor (20) gegenüber einer Unterseite der Rampe (28) abstützt, wobei die Rampe (28) zur Aufnahme eines Ballastgewichts eingerichtet ist und sich mit ihrem einen Ende auf einer Drehachse (34) des Messrades (14) abstützt.

2. Kalibrierungsvorrichtung (10, 110, 210, 310, 410) nach Anspruch 1, **dadurch gekennzeichnet, dass** die Bremseinrichtung (16) eine hydraulische Scheibenbremse mit einstellbarer Bremskraft ist, die drehbar an einer Achse des Messrades (14) befestigt ist und auf die Drehachse (34) des Messrades (14) wirkt.

3. Kalibrierungsvorrichtung (10, 210, 310, 410) nach Ansprüche 1 oder 2, **gekennzeichnet durch** eine Rampe (28) zur Aufnahme eines Ballastgewichts, insbesondere eines Fahrzeugs (46), wobei sich die Rampe (28) mit ihrem einen Ende auf einer Drehachse (34) des Messrades (14) abstützt und vorzugsweise die Rampe (28) von einem Rad (66) des Fahrzeugs (46) bis über die Drehachse (34) überfahren werden kann, wobei ein bodenseitiges Ende (96) der Rampe (28) an einem Unterboden (94) des Fahrzeugs (46) abstützbar ist.

4. Kalibrierungsvorrichtung (10) nach Anspruch 3, **dadurch gekennzeichnet, dass** ein Hebelabschnitt (30) starr, insbesondere klappbar oder lösbar, an der Rampe (28) befestigt ist, so dass der Hebelabschnitt (30) und die Rampe (28) eine um die Drehachse (34) des Messrades (14) kippbare Anpresswippe (12) bilden.

5. Kalibrierungsvorrichtung (10) nach Anspruch 3, **dadurch gekennzeichnet, dass** an dem bodenseitigen Ende (96) der Rampe (28) ein Bodenkontaktsensor (32) angeordnet ist, der dazu ausgelegt ist, ein Abheben der bodenseitigen Abstützung der Rampe (28) zu erfassen.

6. Kalibrierungsvorrichtung (110) nach einem der vorhergehenden Ansprüche, **gekennzeichnet durch** ein Ballastgewicht, das sich gegenüber einer Bodenfläche (52) auf dem Kraftmesssensor (20) abstützt, wobei sich der Drehmomentarm (18) derart entgegen einer von dem Ballastgewicht ausgeübten und von dem Kraftmesssensor (20) erfassten Gewichtskraft an dem Ballastgewicht abstützt, dass die während einer Bremsung des Messrades auftretende Gegenkraft zu einer Entlastung des Kraftmesssensors (20) führt, wobei die Gegenkraft auf der Grundlage einer hierdurch bewirkten Verminderung der von dem Kraftmesssensor (20) erfassten Gewichtskraft ermittelt wird.

7. Kalibrierungsvorrichtung (110) nach Anspruch 3 oder 6, **dadurch gekennzeichnet, dass** das Ballastgewicht ein Kraftfahrzeug (46) ist, wobei bevorzugt das Messrad durch ein Fahrzeugrad (40) gebildet ist, und wobei die Bremseinrichtung auf das Fahrzeugrad (40) wirkt.

8. Kalibrierungsvorrichtung (210, 310) nach Anspruch 3, **dadurch gekennzeichnet, dass** der Drehmomentarm durch die Rampe (28) gebildet ist, wobei sich die Rampe (28) mit ihrem den Abstützpunkt aufweisenden anderen freien Ende gegenüber einer Bodenfläche (52) auf dem Kraftmesssensor (20) abstützt, oder der Kraftmesssensor (20) zwischen dem Ende der Rampe (96) und einem Unterboden (94) des Fahrzeugs (46) angeordnet ist, und dass bevorzugt an der Rampe (28) eine erste, parallel zu dem Messrad (14) gelagerte Führungsrolle (60) angeordnet ist, welche zusammen mit dem Messrad (14) oder einer parallel zu dem Messrad (14) gelagerten und mit dem Messrad (14) antriebsgekoppelten zweiten Führungsrolle (62) eine zwischen dem Abstützpunkt und der Drehachse liegende Aufnahme für ein Fahrzeugrad (40) bildet, wobei die Bremseinrichtung eine auf das Fahrzeugrad (40) wirkende Bremseinrichtung des Fahrzeugs (46) ist.

9. Kalibrierungsvorrichtung (310) nach Anspruch 8, **dadurch gekennzeichnet, dass** die zweite Führungsrolle (62) mit dem Messrad über ein Getriebe, insbesondere ein Ketten- oder Riemengetriebe (64), gekoppelt ist, welches eine gegebene Antriebsdrehzahl des Messrades (14) in eine höhere Abtriebsdrehzahl der zweiten Führungsrolle (62) übersetzt.

10. Kalibrierungsvorrichtung (10, 110, 210, 310, 410) nach einem der vorangegangenen Ansprüche, **dadurch gekennzeichnet, dass** der Durchmesser Dmr des Messrades (14) größer als der Abstand Ar der Bremsenprüfrollen (58) und kleiner gleich 300% des Abstands Ar, insbesondere kleiner gleich 200% des Abstands Ar, bevorzugt 150% des Abstandes Ar der Bremsenprüfrollen (58) ist, um eine Keilwirkung zu bewirken.

11. Kalibrierungsvorrichtung (10, 110, 210, 310, 410) nach einem der vorangegangenen Ansprüche, **dadurch gekennzeichnet, dass** das Messrad (14) ein gering bis nicht kompressibles Rad ist, insbesondere ein hartelastisches Rad und/oder ein Rad mit Kunststoffmantel, Vollgummimantel oder Metallmantel.

12. Kalibrierungsvorrichtung (10, 110, 210, 310, 410) nach einem der vorangegangenen Ansprüche, **dadurch gekennzeichnet, dass** eine zwischen einem Angreifpunkt der Bremseinrichtung (16) und dem Abstützpunkt wirksame Länge des Drehmomentarms (18) zur Einstellung des Messbereichs veränderbar ist.

13. Kalibrierungsvorrichtung (10, 110, 210, 310, 410) nach einem der vorangegangenen Ansprüche, **dadurch gekennzeichnet, dass** zwei Messräder (14) an Endbereichen einer gemeinsamen Drehachse (34), insbesondere einer die Drehachse (34) bildenden Welle, angeordnet sind, und dass insbesondere zwischen den Messrädern (14) die Bremseinrichtung (16), insbesondere eine Scheibenbremseinrichtung, angeordnet ist.

14. Kalibrierungsvorrichtung (10, 110, 210, 310, 410) nach Anspruch 13, **dadurch gekennzeichnet, dass** der Abstand der Messräder (14) voneinander derart gewählt ist, dass jedes der Messräder (14) an einem jeweiligen axialen Endbereich der Bremsenprüfrollen (58) aufsteht.

15. Kalibrierungsvorrichtung (10, 110, 210, 310, 410) nach einem der vorangegangenen Ansprüche, **dadurch gekennzeichnet, dass** die Kalibrierungsauswerteeinrichtung (22) mit einer für eine Erfassung einer Videosequenz einer Bremskraft-Anzeigevorrichtung (56) des Bremsenprüfstandes (50) vorgesehenen Videokamera (24) verbunden ist, wobei die Kalibrierungsauswerteeinrichtung (22) zum Aufzeichnen und Wiedergeben der Videosequenz und/oder zum Ermitteln von Bremskraft-Messwerten des Bremsenprüfstandes (50) aus der Videosequenz und zum Vergleichen der Bremskraft-Messwerte mit den durch den Kraftmesssensor (20) erfassten Messwerten eingerichtet ist.

16. Kalibrierungsvorrichtung (10, 110, 210, 310, 410) nach einem der vorangegangenen Ansprüche, **dadurch gekennzeichnet, dass** der Hebelabschnitt (30) und/oder der Drehmomentarm (18) in metallischer Leichtbauweise, insbesondere aus Strangpressprofilen ausgeführt ist, um ein geringes Gewicht und eine einfache Zusammensteckbarkeit der Kalibrierungsvorrichtung (10, 110, 210, 310, 410) bereitzustellen.

17. Kalibrierungsvorrichtung (10, 110, 210, 310, 410) nach einem der vorangegangenen Ansprüche, **dadurch gekennzeichnet,** das die Kalibrierungsvorrichtung (10, 110, 210, 310, 410) aus einem Set besteht, umfassend eine in einem Auswertekoffer (102) untergebrachte Kalibrierungsauswerteeinrichtung (22) und eine Messrampe (100), die das Messrad (14), die Bremseinrichtung (16), den Drehmomentarm (18) und den Kraftmesssensor (20) umfasst, wobei elektrische Verbindungen zwischen Auswertekoffer (102) und Messrampe (100) steckbar ausgeführt sind.

18. Kalibrierungsvorrichtung (10, 110, 210, 310, 410) nach einem der vorangegangenen Ansprüche, **dadurch gekennzeichnet, dass** eine Überwachungseinrichtung des Messraddurchmessers umfasst ist, die bevorzugt ein drehfrei an der Achse des Messrades angeordnetes Überwachungsrad oder ein Überwachungsradsegment umfasst, dessen maximaler Radius geringfügig geringer als ein Sollradius des Messrades ist.

19. Kalibrierungsvorrichtung (10, 110, 210, 310, 410) nach einem der vorangegangenen Ansprüche, **dadurch gekennzeichnet, dass** ein drehfreies Schlupfrad an der Achse des Messrades angeordnet ist, das aus einem kompressiblen, weichen Material besteht, und dessen Durchmesser zumindest geringfügig größer als das Messrad ist, wobei eine Drehzahl des Schlupfrades und eine Drehzahl des Messrades unabhängig voneinander erfassbar sind.

20. Verfahren zum Betreiben einer Kalibrierungsvorrichtung (10, 110, 210, 310, 410) nach einem der vorangegangenen Ansprüche, **gekennzeichnet durch** die Schritte:

- Aufsetzen der Kalibrierungsvorrichtung (10, 110, 210, 310, 410) auf den Bremsenprüfstand (50) derart, dass das zumindest eine Messrad (14) zwischen den Bremsenprüfrollen (58) aufgenommen ist,
- Antreiben des Messrades (14) mittels der Bremsenprüfrollen (58),
- Betätigen der Bremseinrichtung (16) zur steuerbaren Bremsung des Messrades (14), insbesondere mit einer einstellbaren Bremskraft,
- Ermitteln der während der Bremsung des Messrades (14) auftretenden Gegenkraft mittels des Kraftmesssensors (20),
- Übermitteln der durch den Kraftmesssensor (20) erfassten Messwerte an die Kalibrierungsauswerteeinrichtung (22), und
- Ermitteln zumindest einer Bremskraft auf der Grundlage der erfassten Messwerte mittels der Kalibrierungsauswerteeinrichtung (22).

21. Verfahren nach Anspruch 20, **dadurch gekennzeichnet, dass** der Bremsenprüfstand (50) auf der Grundlage eines Vergleichs zumindest einer durch die Kalibrierungsauswerteeinrichtung (22) ermittelten Bremskraft mit einer korrespondierenden, von dem Bremsenprüfstand (50) erfassten Bremskraft kalibriert oder geeicht wird.

22. Verfahren nach Anspruch 20 oder 21, **dadurch gekennzeichnet, dass** die Kalibrierungsvorrichtung (10, 110, 210, 310, 410) eine Rampe (28) zur Aufnahme eines Fahrzeugs (46) aufweist, wobei sich die Rampe (28) mit ihrem einen Ende auf einer Drehachse (34) des Messrades (14) abstützt, wobei zur Erzeugung einer Anpresskraft Fa ein Fahrzeug mit einem Rad auf die Rampe (28) gefahren wird und eine Drehmomentkraft bei einer Bremsung des Messrades (14) durch den Kraftmesssensor (20) erfasst wird.

23. Verfahren nach Anspruch 22, **dadurch gekennzeichnet, dass** ein Hebelabschnitt (30) starr, insbesondere klappbar oder lösbar, an der Rampe (28) befestigt ist, so dass der Hebelabschnitt (30) und die Rampe (28) eine um eine Drehachse (34) des Messrades (14) kippbare Anpresswippe (12) bilden, und dass durch Aufwendung einer Gegenkraft Fg auf den Hebelabschnitt (30) der Anpresswippe (12) ein Freischweben der bodenseitigen Abstützung der Rampe (28) erreicht und somit der Messbereich erweitert wird.

24. Verfahren nach Anspruch 23, **dadurch gekennzeichnet, dass** das Fahrzeug bis oder über die Drehachse (34) gefahren wird und sich die Rampe (28) gegenüber einem Unterboden (94) des Fahrzeugs (46) abstützt.

**Claims**

1. Calibrating device (10, 110, 210, 310, 410) for a brake test stand (50), the brake test stand (50) having at least one pair of brake test rollers (58) mounted parallel at a distance Ar, at least one measuring wheel (14) interacting with the brake test rollers (58), a braking device (16) for controllable braking of the measuring wheel (14), a torque arm (18) by which the braking device (16) is supported in a support point for transmission of a counterforce occurring during braking of the measuring wheel (14), at least one force measuring sensor (20) designed to determine the counterforce effective at the support point, and a calibration evaluation device (22) linked to the force measuring sensor (20) for processing and/or displaying measured values recorded by the force measuring sensor (20), **characterized in that** the braking device (16) presses on the force measuring sensor (20) via the torque arm (18) relative to a floor surface (52) or by a ramp (28), wherein the braking device (16) presses on the force measuring sensor (20) via the torque arm (18) relative to an underside of the ramp (28), wherein the ramp (28) is configured for receiving a ballast weight and presses at its one end on a rotary axle (34) of the measuring wheel (14).

2. Calibrating device (10, 110, 210, 310, 410) according to claim 1, **characterized in that** the braking device (16) is a hydraulic disc brake with settable braking force which is fastened rotatably to an axle of the measuring wheel (14) and acts on the rotary axle (34) of the measuring wheel (14).

3. Calibrating device (10, 210, 310, 410) according to claims 1 or 2, **characterized by** a ramp (28) for receiving a ballast weight, in particular a vehicle (46), wherein the ramp (28) presses at its one end on a rotary axle (34) of the measuring wheel (14) and it is preferably possible for the ramp (28) to be driven over by a wheel (66) of the vehicle (46) to beyond the rotary axle (34), wherein an end (96) of the ramp (28) on the floor side is pressable on an underbody (94) of the vehicle (46).

4. Calibrating device (10) according to claim 3, **characterized in that** a lever section (30) is fastened rigidly, in particular foldably or detachably, to the ramp (28) such that the lever section (30) and the ramp (28) form a contact pressure rocker (12) tiltable about the rotary axle (34) of the measuring wheel (14).

5. Calibrating device (10) according to claim 3, **characterized in that** a floor contact sensor (32) is arranged at that end (96) of the ramp (28) on the floor side which is designed to record any lifting of the support of the ramp (28) on the floor side.

6. Calibrating device (110) according to any of the preceding claims, **characterized by** a ballast weight that presses on the force measuring sensor (20) relative to a floor surface (52), wherein the torque arm (18) presses on the ballast weight against a weight force exerted by the ballast weight and recorded by the force measuring sensor (20), such that the counterforce occurring during braking of the measuring wheel leads to a relief of the force on the force measuring sensor (20), wherein the counterforce is determined on the basis of a resultant reduction of the weight force recorded by the force measuring sensor (20).

7. Calibrating device (110) according to claim 3 or 6, **characterized in that** the ballast weight is a motor vehicle (46), wherein the measuring wheel preferably is formed by a vehicle wheel (40) and the braking device acts on the vehicle wheel (40).

8. Calibrating device (210, 310) according to claim 3, **characterized in that** the torque arm is formed by the ramp (28), wherein the ramp (28) presses on the force measuring sensor (20) with its other free end having the support point relative to a floor surface (52), or the force measuring sensor (20) is arranged between the end of the ramp (96) and an underbody (94) of the vehicle (46), and that a first guide roller (60) mounted parallel to the measuring wheel (14) is preferably arranged on the ramp (28) and forms, together with the measuring wheel (14) or with a second guide roller (62) mounted parallel to the measuring wheel (14) and drive-linked to the measuring wheel (14), a receptacle for a vehicle wheel (40) situated between the support point and the rotary axle, wherein the braking device is a braking device of the vehicle (46) acting on the vehicle wheel (40).

9. Calibrating device (310) according to claim 8, **characterized in that** the second guide roller (62) is linked to the measuring wheel by a transmission, in particular a chain gear or belt transmission (64), which transmits a given drive speed of the measuring wheel (14) into a higher output speed of the second guide roller (62).

10. Calibrating device (10, 110, 210, 310, 410) according to any of the preceding claims, **characterized in that** the diameter Dmr of the measuring wheel (14) is greater than the distance Ar between the brake test rollers (58) and less than or equal to 300% of the distance Ar, in particular less than or equal to 200% of the distance Ar, preferably 150% of the distance Ar between the brake test rollers (58), in order to achieve a wedge effect.

11. Calibrating device (10, 110, 210, 310, 410) according to any of the preceding claims, **characterized in that** the measuring wheel (14) is a low- to non-compressible wheel, in particular a hard elastic wheel and/or a wheel with plastic cover, solid rubber cover or metal cover.

12. Calibrating device (10, 110, 210, 310, 410) according to any of the preceding claims, **characterized in that** a length of the torque arm (18) effective between a point of application of the braking device (16) and the support point is alterable for setting the measurement range.

13. Calibrating device (10, 110, 210, 310, 410) according to any of the preceding claims, **characterized in that** two measuring wheels (14) are arranged at end areas of a common rotary axle (34), in particular of a shaft forming the rotary axle (34), and that the braking device (16), in particular a disc braking device, is arranged in particular between the measuring wheels (14).

14. Calibrating device (10, 110, 210, 310, 410) according to claim 13, **characterized in that** the distance of the measuring wheels (14) from one another is selected such that each of the measuring wheels (14) rests on a respective axial end area of the brake test rollers (58).

15. Calibrating device (10, 110, 210, 310, 410) according to any of the preceding claims, **characterized in that** the calibration evaluation device (22) is connected to a video camera (24) provided for recording a video sequence of a braking force indicating device (56) of the brake test stand (50), wherein the calibration evaluation device (22) is configured for recording and replay of the video sequence and/or for determination of braking force measured values of the brake test stand (50) from the video sequence and for comparison of the braking force measured values with the measured values recorded by the force measuring sensor (20).

16. Calibrating device (10, 110, 210, 310, 410) according to any of the preceding claims, **characterized in that** the lever section (30) and/or the torque arm (18) is/are of lightweight metal design, in particular of extruded sections, in order to provide a low weight and simple assembly capability of the calibrating device (10, 110, 210, 310, 410).

17. Calibrating device (10, 110, 210, 310, 410) according to any of the preceding claims, **characterized in that** the calibrating device (10, 110, 210, 310, 410) consists of a set comprising a calibration evaluation device (22) accommodated in an evaluation case (102) and a measuring ramp (100) comprising the measuring wheel (14), the braking device (16), the torque arm (18) and the force measuring sensor (20), wherein electrical connections between the evaluation case (102) and the measuring ramp (100) are designed pluggable.

18. Calibrating device (10, 110, 210, 310, 410) according to any of the preceding claims, **characterized in that** a monitoring device of the measuring wheel diameter is comprised that preferably comprises a monitoring wheel arranged freely rotatable on the axle of the measuring wheel or a monitoring wheel segment whose maximum radius is slightly less than a set radius of the measuring wheel.

19. Calibrating device (10, 110, 210, 310, 410) according to any of the preceding claims, **characterized in that** a freely rotatable slipping wheel is arranged on the axle of the measuring wheel, consisting of a compressible, soft material and having a diameter at least slightly larger than the measuring wheel, wherein a speed of the slipping wheel and a speed of the measuring wheel are recordable independently of one another.

20. Method for operating a calibrating device (10, 110, 210, 310, 410) according to any of the preceding claims, **characterized by** the steps:

 - Placing the calibrating device (10, 110, 210, 310, 410) onto the brake test stand (50) such that the at least one measuring wheel (14) is held between the brake test rollers (58),
 - Driving the measuring wheel (14) by means of the brake test rollers (58),
 - Operating the braking device (16) for controllable braking of the measuring wheel (14), in particular with a settable braking force,
 - Determining the counterforce occurring during braking of the measuring wheel (14) by means of the force measuring sensor (20),
 - Transmitting the measured values recorded by the force measuring sensor (20) to the calibration evaluation device (22), and
 - Determining at least one braking force on the basis of the recorded measured values by means of the calibration evaluation device (22).

21. Method according to claim 20, **characterized in that** the brake test stand (50) is calibrated on the basis of a comparison of at least one braking force determined by the calibration evaluation device (22) with a corresponding braking force recorded by the brake test stand (50).

22. Method according to claim 20 or 21, **characterized in that** the calibrating device (10, 110, 210, 310, 410) has a ramp (28) for receiving a vehicle (46), wherein the ramp (28) presses at its one end on a rotary axle (34) of the measuring wheel (14), wherein for generating a contact pressure force Fa a vehicle is driven with one wheel onto the ramp (28) and a torque force is recorded by the force measuring sensor (20) during braking of the measuring wheel (14).

23. Method according to claim 22, **characterized in that** a lever section (30) is fastened rigidly, in particular foldably or detachably, to the ramp (28) such that the lever section (30) and the ramp (28) form a contact pressure rocker (12) tiltable about a rotary axle (34) of the measuring wheel (14), and that by applying a counterforce Fg onto the lever section (30) of the contact pressure rocker (12) free floating of the support of the ramp (28) is achieved on the floor side and hence the measuring range is extended.

24. Method according to claim 23, **characterized in that** the vehicle is driven up to or past the rotary axle (34) and the ramp (28) presses relative to an underbody (94) of the vehicle (46).

**Revendications**

1. Dispositif de calibrage (10, 110, 210, 310, 410) pour un banc d'essai de freins (50), sachant que le banc d'essai de freins (50) présente au moins une paire de rouleaux d'essai de freins (58) montés parallèlement avec un écart Ar, au moins une roue mesureuse (14) interagissant avec les rouleaux d'essai de freins (58), un dispositif de freinage (16) pour le freinage contrôlable de la roue mesureuse (14), un bras de couple (18) par le biais duquel le dispositif de freinage (16) est soutenu dans un point d'appui pour décharger une contre-force apparaissant pendant un freinage de la roue mesureuse (14), au moins un capteur dynamométrique (20) qui est conçu pour déterminer la contre-force s'exerçant sur le point d'appui, et un dispositif d'analyse de calibrage (22) accouplé au capteur dynamométrique (20) pour traiter et/ou représenter des valeurs de mesure acquises par le capteur dynamométrique (20), **caractérisé en ce que** le dispositif de freinage (16) s'appuie sur le capteur dynamométrique (20) contre une surface au sol (52) par le biais du bras de couple (18) ou par une rampe (28), sachant que le dispositif de freinage (16) s'appuie sur le capteur dynamométrique (20) contre une face inférieure de la rampe (28) par le biais du bras de couple (18), sachant que la rampe (28) est configurée pour accueillir un poids de lestage et s'appuie au niveau d'une de ses extrémités sur un axe rotatif (34) de la roue mesureuse (14).

2. Dispositif de calibrage (10, 110, 210, 310, 410) selon la revendication 1, **caractérisé en ce que** le dispositif de freinage (16) est un frein à disque hydraulique à puissance de freinage réglable, qui est fixé sur un axe de la roue mesureuse (14) de manière à pouvoir tourner et agit sur l'axe rotatif (34) de la roue mesureuse (14).

3. Dispositif de calibrage (10, 110, 210, 310, 410) selon la revendication 1 ou 2, **caractérisé par** une rampe (28) pour accueillir un poids de lestage, notamment un véhicule (46), sachant que la rampe (28) s'appuie au niveau d'une de ses extrémités sur un axe rotatif (34) de la roue mesureuse (14) et que de préférence, la rampe (28) peut être parcourue par une roue (66) du véhicule (46) jusque sur l'axe rotatif (34), sachant qu'une extrémité côté sol (96) de la rampe (28) peut s'appuyer sur un dessous de caisse (94) du véhicule (46).

4. Dispositif de calibrage (10) selon la revendication 3, **caractérisé en ce qu'**une section de levier (30) est fixée de manière rigide, notamment de manière rabattable ou amovible, à une rampe (28) de sorte que la section de levier (30) et la rampe (28) forment une bascule de pression (12) basculable autour de l'axe rotatif (34) de la roue mesureuse (14).

5. Dispositif de calibrage (10) selon la revendication 3, **caractérisé en ce qu'**est disposé, sur l'extrémité côté sol (96) de la rampe (28), un capteur de contact au sol (32) qui est conçu pour acquérir un soulèvement de l'appui côté sol de la rampe (28).

6. Dispositif de calibrage (110) selon une des revendications précédentes, **caractérisé par** un poids de lestage qui s'appuie sur le capteur dynamométrique (20) contre une surface au sol (52), sachant que le bras de couple (18) s'appuie contre le poids de lestage à l'encontre d'un poids exercé par le poids de lestage et acquis par le capteur dynamométrique (20) de sorte que la contre-force apparaissant pendant un freinage de la roue mesureuse entraîne un délestage du capteur dynamométrique (20), sachant que la contre-force est déterminée sur la base d'une réduction du poids acquis par le capteur dynamométrique (20), ainsi provoquée.

7. Dispositif de calibrage (110) selon la revendication 3 ou 6, **caractérisé en ce que** le poids de lestage est un véhicule automobile (46), sachant que de préférence, la roue mesureuse est constituée par une roue du véhicule (40), et sachant que le dispositif de freinage agit sur la roue du véhicule (40).

8. Dispositif de calibrage (210, 310) selon la revendication 3, **caractérisé en ce que** le bras de couple est formé par la rampe (28), sachant que la rampe (28) s'appuie au niveau de son autre extrémité libre présentant le point d'appui, sur le capteur dynamométrique (20) contre la surface au sol (52), ou que le capteur dynamométrique (20) est disposé entre l'extrémité de la rampe (96) et un fond de caisse (94) du véhicule (46), et qu'est disposé, de préférence sur la rampe (28), un premier rouleau de guidage (60) monté parallèlement à la roue mesureuse (14) qui forme, avec la roue mesureuse (14) ou un second rouleau de guidage (62) monté parallèlement à la roue mesureuse (14) et accouplé par le biais d'un entraînement à la roue mesureuse (14), un logement situé entre le point d'appui et l'axe rotatif, pour une roue du véhicule (40), sachant que le dispositif de freinage est un dispositif de freinage du véhicule (46), agissant sur la roue du véhicule (40).

9. Dispositif de calibrage (310) selon la revendication 8, **caractérisé en ce que** le second rouleau de guidage (62) est accouplé à la roue mesureuse par le biais d'une transmission, notamment un engrenage à chaîne ou une transmission par courroie (64), qui multiplie une vitesse d'entraînement donnée de la roue mesureuse (14) en une vitesse de sortie supérieure du second rouleau de guidage (62).

10. Dispositif de calibrage (10, 110, 210, 310, 410) selon une des revendications précédentes, **caractérisé en ce que** le diamètre Dmr de la roue mesureuse (14) est supérieur à l'écart Ar des rouleaux d'essai de freins (58) et inférieur ou égal à 300 % de l'écart Ar, notamment inférieur ou égal à 200 % de l'écart Ar, de préférence 150 % de l'écart Ar des rouleaux d'essai de freins (58) pour réaliser un effet de calage.

11. Dispositif de calibrage (10, 110, 210, 310, 410) selon une des revendications précédentes, **caractérisé en ce que** la roue mesureuse (14) est une roue faiblement ou non compressible, notamment une roue en matière élastique dure et/ou une roue avec une enveloppe en plastique, une enveloppe en caoutchouc plein ou une enveloppe métallique.

12. Dispositif de calibrage (10, 110, 210, 310, 410) selon une des revendications précédentes, **caractérisé en ce qu'**une longueur du bras de couple (18) effective entre un point d'application du dispositif de freinage (16) et le point d'appui est variable pour régler la plage de mesure.

13. Dispositif de calibrage (10, 110, 210, 310, 410) selon une des revendications précédentes, **caractérisé en ce que** deux roues mesureuses (14) sont disposées sur des zones terminales d'un axe rotatif commun (34), notamment d'un arbre formant l'axe rotatif (34), et que le dispositif de freinage (16), notamment un dispositif de frein à disque, est disposé en particulier entre les roues mesureuses (14).

14. Dispositif de calibrage (10, 110, 210, 310, 410) selon la revendication 13, **caractérisé en ce que** l'écart entre les roues mesureuses (14) est sélectionné de sorte que chacune des roues mesureuses (14) se trouve sur chacune des zones terminales axiales des rouleaux d'essai de freins (58).

15. Dispositif de calibrage (10, 110, 210, 310, 410) selon une des revendications précédentes, **caractérisé en ce que** le dispositif d'analyse du calibrage (22) est relié à une caméra (24) prévue pour une acquisition d'une séquence vidéo d'un dispositif d'affichage de puissance de freinage (56) du banc d'essai des freins (50), sachant que le dispositif d'analyse du calibrage (22) est configuré pour enregistrer et rendre la séquence vidéo et/ou pour déterminer les valeurs de mesure de la puissance de freinage du banc d'essai des freins (50) à partir de la séquence vidéo et pour comparer les valeurs de mesure de la puissance de freinage aux valeurs de mesure acquises par le capteur dynamométrique (20).

16. Dispositif de calibrage (10, 110, 210, 310, 410) selon une des revendications précédentes, **caractérisé en ce que** la section de levier (30) et/ou l'arbre de couple (18) est réalisé(e) en construction légère métallique, notamment en profilés extrudés pour fournir un poids faible et un emboîtage simple du dispositif de calibrage (10, 110, 210, 310, 410).

17. Dispositif de calibrage (10, 110, 210, 310, 410) selon une des revendications précédentes, **caractérisé en ce que** le dispositif de calibrage (10, 110, 210, 310, 410) est composé d'un kit comprenant un dispositif d'analyse du calibrage (22) logé dans un coffret d'analyse (102) et une rampe de mesure (100) qui comprend la roue mesureuse (14), le dispositif de freinage (16), le bras de couple (18) et le capteur dynamométrique (20), sachant que les raccords électriques entre le coffret d'analyse (102) et la rampe de mesure (100) sont enfichables.

18. Dispositif de calibrage (10, 110, 210, 310, 410) selon une des revendications précédentes, **caractérisé en ce qu'**est compris un dispositif de surveillance du diamètre de la roue mesureuse qui comprend, de préférence, une roue de surveillance ou un segment de roue de surveillance disposé(e) sur l'axe de la roue mesureuse de manière à tourner librement dont le rayon maximal est légèrement inférieur à un rayon de consigne de la roue mesureuse.

19. Dispositif de calibrage (10, 110, 210, 310, 410) selon une des revendications précédentes, **caractérisé en ce qu'**est disposée sur l'axe de la roue mesureuse une roue de glissement tournant librement qui est constituée d'un matériau souple compressible et dont le diamètre est au moins légèrement supérieur à celui de la roue de mesure, sachant qu'une vitesse de rotation de la roue de glissement et une vitesse de rotation de la roue de mesure peuvent être acquises indépendamment l'une de l'autre.

20. Procédé pour exploiter un dispositif de calibrage (10, 110, 210, 310, 410) selon une des revendications précédentes, **caractérisé par** les étapes suivantes :

- Pose d'un dispositif de calibrage (10, 110, 210, 310, 410) sur le banc d'essai des freins (50) de sorte que ladite au moins une roue mesureuse (14) est logée entre les rouleaux d'essai de freins (58),
- Entraînement de la roue mesureuse (14) au moyen des rouleaux d'essai de freins (58),
- Actionnement du dispositif de freinage (16) pour le freinage contrôlable de la roue mesureuse (14), notamment avec une puissance de freinage réglable,
- Détermination de la contre-force apparaissant lors du freinage de la roue mesureuse (14) au moyen du capteur dynamométrique (20),
- Transfert des valeurs de mesure acquises par le capteur dynamométrique (20) au dispositif d'analyse du calibrage (22), et
- Détermination d'au moins une puissance de freinage sur la base des valeurs de mesure acquises au moyen du dispositif d'analyse du calibrage (22).

21. Procédé selon la revendication 20, **caractérisé en ce que** le banc d'essai des freins (50) est calibré ou étalonné sur la base d'une comparaison entre au moins une puissance de freinage déterminée par le dispositif d'analyse de calibrage (22) et une puissance de freinage correspondante, acquise par le banc d'essai des freins (50).

22. Procédé selon la revendication 20 ou 21, **caractérisé en ce que** le dispositif de calibrage (10, 110, 210, 310, 410) présente une rampe (28) pour loger un véhicule (46), sachant que la rampe (28) s'appuie au niveau d'une de ses extrémités sur l'axe rotatif (34) de la roue mesureuse (14), sachant que pour créer une force de pression Fa, un véhicule est conduit avec une roue sur la rampe (28) et qu'une force de couple est acquise par le capteur dynamométrique (20), lors d'un freinage de la roue mesureuse (14).

23. Procédé selon la revendication 22, **caractérisé en ce qu'**une section de levier (30) est fixée de manière rigide, notamment de manière rabattable ou amovible, sur la rampe (28) de sorte que la section de levier (30) et la rampe (28) forment une bascule de pression (12) basculable autour d'un axe rotatif (34) de la roue mesureuse (14), et que par l'application d'une contre-force Fg sur la section de levier (30) de la bascule de pression (12), un flottement en l'air de l'appui de la rampe (28), côté sol est obtenu et qu'ainsi, la plage de mesure est étendue.

24. Procédé selon la revendication 23, **caractérisé en ce que** le véhicule est conduit jusqu'à ou au-dessus de l'axe rotatif (34) et que la rampe (28) s'appuie contre un fond de caisse (94) du véhicule (46).

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10053513 A1
- DE 4135766 C1
- DE 3805724 C1
- DE 10305346 A1
- DE 10326116 A1
- DE 102011088424 A1
- US 20120297858 A1
- DE 202016005174 U1
- EP 1202037 A1